(19) Europäisches Patentamt
European Patent Office
Office européen des brevets

(11) **EP 4 252 376 B1**

(12) **EUROPEAN PATENT SPECIFICATION**

(45) Date of publication and mention
of the grant of the patent:
**25.03.2026 Bulletin 2026/13**

(21) Application number: **21823367.4**

(22) Date of filing: **23.11.2021**

(51) International Patent Classification (IPC):
*H04L 1/18* (2023.01)      *H04L 1/1829* (2023.01)

(52) Cooperative Patent Classification (CPC):
**H04L 1/1854; H04L 1/1864**

(86) International application number:
**PCT/IB2021/060836**

(87) International publication number:
**WO 2022/112928 (02.06.2022 Gazette 2022/22)**

(54) **HARQ-ACK CODEBOOK CONSTRUCTION**

KONSTRUKTION EINES HARQ-ACK-CODEBUCHS

CONSTRUCTION DE LIVRE DE CODES HARQ-ACK

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.11.2020   US 202063118550 P**

(43) Date of publication of application:
**04.10.2023 Bulletin 2023/40**

(60) Divisional application:
**26158230.8**

(73) Proprietor: **Lenovo (Singapore) Pte. Ltd.
New Tech Park 556741 (SG)**

(72) Inventors:
• **JUNG, Hyejung**
  **Northbrook, Illinois 60062 (US)**
• **BAGHERI, Hossein**
  **Urbana, Illinois 61802 (US)**
• **NANGIA, Vijay**
  **Woodridge, Illinois 60517 (US)**

(74) Representative: **Openshaw & Co.
8 Castle Street
Farnham, Surrey GU9 7HR (GB)**

(56) References cited:
**WO-A1-2020/033623      CN-A- 111 181 709
US-A1- 2021 385 841**

**Description**

FIELD

The subject matter disclosed herein relates generally to wireless communications and more particularly relates to HARQ-ACK codebook construction.

BACKGROUND

In certain wireless communications networks, HARQ-ACK may be used. In such networks, there may be at least one delayed HARQ-ACK codebook.

CN 111 181 709 A relates to an information transmission method and terminal. WO 2020/033623 A1 relates to efficient and robust acknowledgment procedures for new radio operation in unlicensed bands.

BRIEF SUMMARY

Methods for HARQ-ACK codebook construction are disclosed. Apparatuses and systems also perform the functions of the methods. One embodiment of a method includes constructing, at a user equipment, a first hybrid automatic repeat request acknowledgement codebook based on first hybrid automatic repeat request acknowledgement information. The first hybrid automatic repeat request acknowledgement codebook is scheduled to be transmitted on a first uplink transmission occasion. In some embodiments, the method includes determining at least part of the first hybrid automatic repeat request acknowledgement information to be transmitted together with second hybrid automatic repeat request acknowledgement information in response to the first uplink transmission occasion not being available for transmission. The second hybrid automatic repeat request acknowledgement information is scheduled to be transmitted later than the first uplink transmission occasion. In certain embodiments, the method includes transmitting a second hybrid automatic repeat request acknowledgement codebook on a second uplink transmission occasion. The second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

One apparatus for HARQ-ACK codebook construction includes a user equipment. In some embodiments, the apparatus includes a processor that: constructs a first hybrid automatic repeat request acknowledgement codebook based on first hybrid automatic repeat request acknowledgement information, wherein the first hybrid automatic repeat request acknowledgement codebook is scheduled to be transmitted on a first uplink transmission occasion; and determines at least part of the first hybrid automatic repeat request acknowledgement information to be transmitted together with second hybrid automatic repeat request acknowledgement information in response to the first uplink transmission occasion not being available for transmission. The second hybrid automatic repeat request acknowledgement information is scheduled to be transmitted later than the first uplink transmission occasion. In various embodiments, the apparatus includes a transmitter that transmits a second hybrid automatic repeat request acknowledgement codebook on a second uplink transmission occasion. The second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

Another embodiment of a method for HARQ-ACK codebook construction includes transmitting, from a network device, scheduling information for a first hybrid automatic repeat request acknowledgement codebook to a user equipment. The first hybrid automatic repeat request acknowledgement codebook is based on first hybrid automatic repeat request acknowledgement information and is scheduled on a first uplink transmission occasion. In certain embodiments, the method includes receiving a second hybrid automatic repeat request acknowledgement codebook on a second uplink transmission occasion. The second hybrid automatic repeat request acknowledgement codebook is based on at least a part of the first hybrid automatic repeat request acknowledgement information and second hybrid automatic repeat request acknowledgement information, the first uplink transmission occasion starts earlier than the second uplink transmission occasion, at least the part of the first hybrid automatic repeat request acknowledgement information is determined to be received together with the second hybrid automatic repeat request acknowledgement information in response to the first uplink transmission occasion not being available for transmission by the user equipment, and the second hybrid automatic repeat request acknowledgement information is scheduled to be received later than the first uplink transmission occasion.

Another apparatus for HARQ-ACK codebook construction includes a network device. In some embodiments, the apparatus includes a transmitter that transmits scheduling information for a first hybrid automatic repeat request acknowledgement codebook to a user equipment. The first hybrid automatic repeat request acknowledgement codebook is based on first hybrid automatic repeat request acknowledgement information and is scheduled on a first uplink transmission occasion. In various embodiments, the apparatus includes a receiver that receives a second hybrid automatic repeat request acknowledgement codebook on a second uplink transmission occasion, wherein the second hybrid automatic repeat request acknowledgement codebook is based on at least the part of the first hybrid automatic repeat request acknowledgement information and second hybrid automatic repeat request acknowledgement information, the first uplink transmission occasion starts earlier than the second uplink transmission occasion, at least the part of the first hybrid automatic repeat request acknowledgement information is determined to be received together with second hybrid automatic repeat request acknowledgement information in response to the first uplink transmission occasion not being available for transmission by the user equipment, and the second hybrid automatic repeat request acknowledgement information is scheduled to be received later than the first uplink transmission occasion.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a schematic block diagram illustrating one embodiment of a wireless communication system for HARQ-ACK codebook construction;
Figure 2 is a schematic block diagram illustrating one embodiment of an apparatus that may be used for HARQ-ACK codebook construction;
Figure 3 is a schematic block diagram illustrating one embodiment of an apparatus that may be used for HARQ-ACK codebook construction;
Figure 4 is a diagram illustrating one embodiment of an SPS-Config IE;
Figure 5 is a flow chart diagram illustrating one embodiment of a method for HARQ-ACK codebook construction; and
Figure 6 is a flow chart diagram illustrating another embodiment of a method for HARQ-ACK codebook construction.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

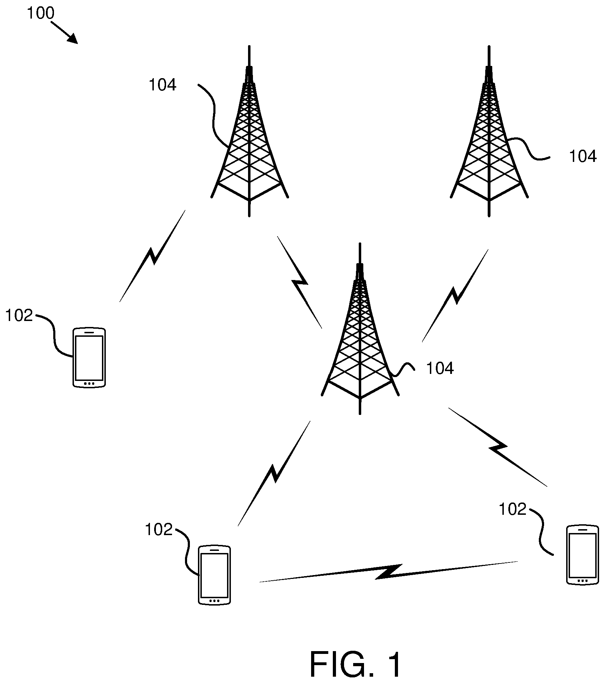

Figure 1 depicts an embodiment of a wireless communication system 100 for HARQ-ACK codebook construction. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth®, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may construct a first hybrid automatic repeat request acknowledgement codebook based on first hybrid automatic repeat request acknowledgement information. The first hybrid automatic repeat request acknowledgement codebook is scheduled to be transmitted on a first uplink transmission occasion. In some embodiments, the remote unit 102 may determine at least part of the first hybrid automatic repeat request acknowledgement information to be transmitted together with second hybrid automatic repeat request acknowledgement information in response to the first uplink transmission occasion not being available for transmission. The second hybrid automatic repeat request acknowledgement information is scheduled to be transmitted later than the first uplink transmission occasion. In certain embodiments, the remote unit 102 may transmit a second hybrid automatic repeat request acknowledgement codebook on a second uplink transmission occasion. The second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion. Accordingly, the remote unit 102 may be used for HARQ-ACK codebook construction.

In certain embodiments, a network unit 104 may transmit scheduling information for a first hybrid automatic repeat request acknowledgement codebook to a user equipment. The first hybrid automatic repeat request acknowledgement codebook is based on first hybrid automatic repeat request acknowledgement information and is scheduled on a first uplink transmission occasion. In some embodiments, the network unit 104 may receive a second hybrid automatic repeat request acknowledgement codebook on a second uplink transmission occasion. The second hybrid automatic repeat request acknowledgement codebook is based on at least a part of the first hybrid automatic repeat request acknowledgement information and second hybrid automatic repeat request acknowledgement information, the first uplink transmission occasion starts earlier than the second uplink transmission occasion, at least the part of the first hybrid automatic repeat request acknowledgement information is determined to be received together with the second hybrid automatic repeat request acknowledgement information in response to the first uplink transmission occasion not being available for transmission by the user equipment, and the second hybrid automatic repeat request acknowledgement information is scheduled to be received later than the first uplink transmission occasion. Accordingly, the network unit 104 may be used for HARQ-ACK codebook construction.

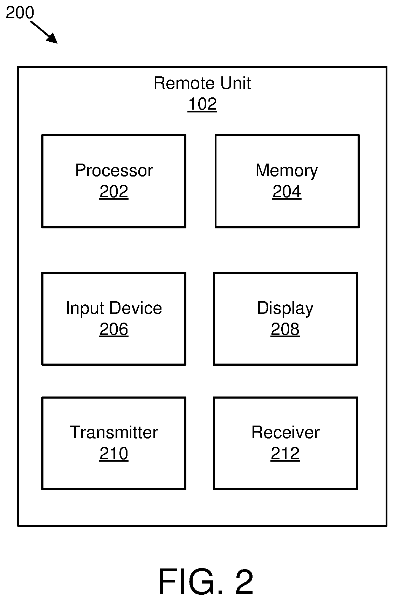

Figure 2 depicts one embodiment of an apparatus 200 that may be used for HARQ-ACK codebook construction. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the processor 202: constructs a first hybrid automatic repeat request acknowledgement codebook based on first hybrid automatic repeat request acknowledgement information, wherein the first hybrid automatic repeat request acknowledgement codebook is scheduled to be transmitted on a first uplink transmission occasion; and determines at least part of the first hybrid automatic repeat request acknowledgement information to be transmitted together with second hybrid automatic repeat request acknowledgement information in response to the first uplink transmission occasion not being available for transmission. The second hybrid automatic repeat request acknowledgement information is scheduled to be transmitted later than the first uplink transmission occasion. In various embodiments, the transmitter 210 transmits a second hybrid automatic repeat request acknowledgement codebook on a second uplink transmission occasion. The second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

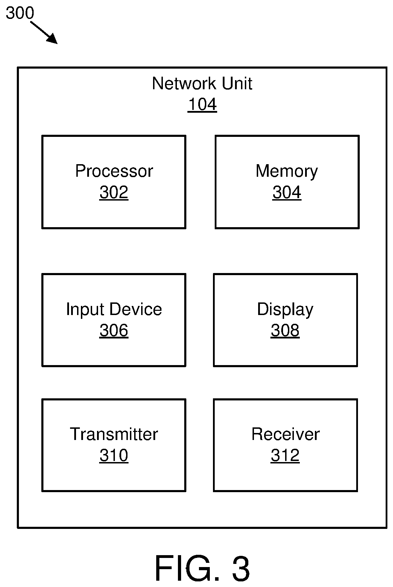

Figure 3 depicts one embodiment of an apparatus 300 that may be used for HARQ-ACK codebook construction. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the transmitter 310 transmits scheduling information for a first hybrid automatic repeat request acknowledgement codebook to a user equipment. The first hybrid automatic repeat request acknowledgement codebook is based on first hybrid automatic repeat request acknowledgement information and is scheduled on a first uplink transmission occasion. In some embodiments, the receiver 312 receives a second hybrid automatic repeat request acknowledgement codebook on a second uplink transmission occasion, wherein the second hybrid automatic repeat request acknowledgement codebook is based on at least the part of the first hybrid automatic repeat request acknowledgement information and second hybrid automatic repeat request acknowledgement information, the first uplink transmission occasion starts earlier than the second uplink transmission occasion, at least the part of the first hybrid automatic repeat request acknowledgement information is determined to be received together with second hybrid automatic repeat request acknowledgement information in response to the first uplink transmission occasion not being available for transmission by the user equipment, and the second hybrid automatic repeat request acknowledgement information is scheduled to be received later than the first uplink transmission occasion.

In certain embodiments, there may be downlink ("DL") semi-persistent scheduling ("SPS") enhancements for new radio ("NR") to support periodic traffics of various ultra-reliable low-latency communication ("URLLC") such as power distribution, factory automation, and transportation industry (e.g., including remote driving). In some embodiments, multiple simultaneous active DL SPS configurations for a given bandwidth part ("BWP") may reduce a scheduling delay by providing more frequent transmission opportunities and may support multiple different service types for a user equipment ("UE").

In some embodiments, with an SPS configuration, a UE may be semi-statically configured with a physical uplink control channel ("PUCCH") resource index for hybrid automatic repeat request ("HARQ") acknowledgment ("ACK") ("HARQ-ACK") feedback for an SPS physical downlink shared channel ("PDSCH"). Further, in various embodiments, a UE identifies PDSCH-to-HARQ feedback delay in terms of a number of slots from the PDSCH-to-HARQ_feedback timing indicator field in DCI format 1_0 or, if present, in DCI format 1_1 activating the SPS PDSCH reception, and determines a slot where the UE transmits HARQ-ACK information for a given SPS PDSCH.

In certain embodiments, a UE may be configured with multiple DL SPS configurations for a given BWP, and more than one SPS configuration for the UE may be active at a given time at a given serving cell. If a periodicity of a DL SPS configuration is set to a small value (e.g., 1 slot, 1 ms, 0.5 ms) and/or if multiple DL SPS configurations are active, the UE is expected to transmit HARQ-ACK feedback to SPS PDSCHs very frequently according to a semi-statically configured pattern (e.g., based on the semi-statically configured PUCCH resource index and PDSCH-to-HARQ feedback delay). However, with dynamic time division duplex ("TDD") operations in non-paired spectrum, it may be difficult to guarantee UL regions for semi-statically configured HARQ-ACK transmissions.

In some embodiments, a UE may construct a HARQ-ACK codebook for a given HARQ-ACK feedback occasion if the HARQ-ACK codebook includes at least one delayed HARQ-ACK codebook from at least one previous HARQ-ACK feedback occasion.

In various embodiments, there may be a HARQ-ACK codebook determination.

For a HARQ-ACK information bit, a UE generates a positive acknowledgement ("ACK") if the UE detects a downlink control information ("DCI") format that provides a SPS PDSCH release or correctly decodes a transport block, and generates a negative acknowledgement ("NACK") if the UE does not correctly decode the transport block. A HARQ-ACK information bit value of 0 represents a NACK while a HARQ-ACK information bit value of 1 represents an ACK.

In certain embodiments, a cyclic redundancy check ("CRC") for a DCI format is scrambled with a radio network temporary identifier ("RNTI") (e.g., C-RNTI, an MCS-C-RNTI, or a CS-RNTI).

In some embodiments, there may be a Type-1 HARQ-ACK codebook in a physical uplink control channel.

For a serving cell $c$, an active DL BWP, and an active uplink ("UL") BWP, the UE determines a set of $M_{A,c}$ occasions for candidate PDSCH receptions for which the UE can transmit corresponding HARQ-ACK information in a PUCCH in slot $n_U$. If serving cell c is deactivated, the UE uses as the active DL BWP for determining the set of $M_{A,c}$ occasions for candidate PDSCH receptions a DL BWP provided by firstActiveDownlinkBWP-Id. The determination is based: a) on a set of slot timing values $K_1$ associated with the active UL BWP, 1) if the UE is configured to monitor physical downlink control channel ("PDCCH") for DCI format 1_0 and is not configured to monitor PDCCH for either DCI format 1_1 or DCI format 1_2 on serving cell $c$, $K_1$ is provided by the slot timing values {1, 2, 3, 4, 5, 6, 7, 8}, 2) if the UE is configured to monitor PDCCH for DCI format 1_1 and is not configured to monitor PDCCH for DCI format 1_2 for serving cell c, $K_1$ is provided by dl-DataToUL-ACK, 3) if the UE is configured to monitor PDCCH for DCI format 1_2 and is not configured to monitor PDCCH for DCI format 1_1 for serving cell $c$, $K_1$ is provided by dl-DataToUL-ACK-ForDCIFormat1_2, 4) if the UE is configured to monitor PDCCH for DCI format 1_1 and DCI format 1_2 for serving cell $c$, $K_1$ is provided by the union of dl-DataToUL-ACK and dl-DataToUL-ACK-ForDCIFormat1_2; b) on a set of row indexes $R$ of a table that is associated with the active DL BWP and defining respective sets of slot offsets $K_0$, start and length indicators ("SLIV"), and PDSCH mapping types for PDSCH reception, where the row indexes $R$ of the table are provided by the union of row indexes of time domain resource allocation tables for DCI formats the UE is configured to monitor PDCCH for serving cell $c$, 1) if the UE is provided ReferenceofSLIV-ForDCIFormat1_2, for each row index with slot offset $K_0 = 0$ and PDSCH mapping Type B in a set of row indexes of a table for DCI format 1_2, for each PDCCH monitoring occasion in a set of PDCCH monitoring occasions with different starting symbols within a slot where the UE monitors PDCCH for DCI format 1_2 and with starting symbol $S_0 > 0$, if $S + S_0 + L \leq 14$ for normal cyclic prefix and $S + S_0 + L \leq 12$ for extended cyclic prefix, add a new row index in the set of row indexes of the table by replacing the starting symbol $S$ of the row index by $S + S_0$; c) on the ratio $2^{\mu_{DL} - \mu_{UL}}$ between the downlink subcarrier spacing ("SCS") configuration $\mu_{DL}$ and the uplink SCS configuration $\mu_{UL}$ provided by SCS in BWP-Downlink and BWP-Uplink for the active DL BWP and the active UL BWP, respectively; d) if provided, on tdd-UL-DL-ConfigurationCommon and tdd-UL-DL-ConfigurationDedicated; and e) if ca-SlotOffset is provided, on $N_{\text{slot,offset,c}}^{\text{DL}}$ and $\mu_{\text{offset,DL,c}}$ provided by *ca-SlotOffset* for serving cell $c$, or on $N_{\text{slot,offset}}^{\text{UL}}$ and $\mu_{\text{offset,UL}}$ provided by *ca-SlotOffset* for the primary cell.

In various embodiments, for the set of slot timing values $K_1$, the UE determines a set of $M_{A,c}$ occasions for candidate PDSCH receptions or SPS PDSCH releases according to the first pseudo-code provided by Subclause 9.1.2.1 of 3GPP TS 38.213. A location in the Type-1 HARQ-ACK codebook for HARQ-ACK information corresponding to a single SPS PDSCH release is same as for a corresponding SPS PDSCH reception. A location in the Type-1 HARQ-ACK codebook for HARQ-ACK information corresponding to multiple SPS PDSCH releases by a single DCI format is same as for a corresponding SPS PDSCH reception with the lowest SPS configuration index among the multiple SPS PDSCH releases.

If the UE indicates a capability to receive more than one PDSCH per slot, for occasions of candidate PDSCH receptions corresponding to rows of $R$ associated with a same value of $b_{r,k,n_D}$, where $b_{r,k,n_D} \in B$, the UE does not expect to receive more than one PDSCH in a same DL slot.

A UE determines $\tilde{o}_0^{ACK}, \tilde{o}_1^{ACK}, ..., \tilde{o}_{O^{ACK}-1}^{ACK}$ HARQ-ACK information bits, for a total number of $O_{ACK}$ HARQ-ACK information bits, of a HARQ-ACK codebook for transmission in a PUCCH according to the second pseudo-code provided by Subclause 9.1.2.1 of 3GPP TS 38.213. In the second pseudo-code, if the UE does not receive a transport block or a CBG, due to the UE not detecting a corresponding DCI format, the UE generates a NACK value for the transport block or the CBG. The cardinality of the set $M_{A,c}$ defines a total number $M_c$ of occasions for PDSCH reception or SPS PDSCH release for serving cell $c$ corresponding to the HARQ-ACK information bits.

In certain embodiments, there may be PUCCH resource sets. If a UE is not provided pdsch-HARQ-ACK-Codebook, the UE generates at most one HARQ-ACK information bit. If the UE provides HARQ-ACK information in a PUCCH transmission in response to detecting a DCI format scheduling a PDSCH reception or a SPS PDSCH release, the UE determines a PUCCH resource with index $r_{\text{PUCCH}}$, $0 \leq r_{\text{PUCCH}} \leq 15$, as $r_{\text{PUCCH}} = \left\lfloor \frac{2 \cdot n_{\text{CCE,0}}}{N_{\text{CCE}}} \right\rfloor + 2 \cdot \Delta_{\text{PRI}}$, where $N_{\text{CCE}}$ is a number of control channel elements ("CCEs") in a control resource set ("CORESET") of a PDCCH reception with the

DCI format, $n_{\text{CCE},0}$ is the index of a first CCE for the PDCCH reception, and $\Delta_{\text{PRI}}$ is a value of the PUCCH resource indicator field in the DCI format. If a UE has dedicated PUCCH resource configuration, the UE is provided by higher layers with one or more PUCCH resources.

In some embodiments, a PUCCH resource includes the following parameters: 1) a PUCCH resource index provided by pucch-ResourceId; 2) an index of the first physical resource block ("PRB") prior to frequency hopping or for no frequency hopping by startingPRB, if a UE is not provided useInterlacePUCCH-PUSCH in BWP-UplinkDedicated; 3) an index of the first PRB after frequency hopping by secondHopPRB, if a UE is not provided useInterlacePUCCH-PUSCH in BWP-UplinkDedicated; 4) an indication for intra-slot frequency hopping by intraSlotFrequencyHopping, if a UE is not provided useInterlacePUCCH-PUSCH in BWP-UplinkDedicated; 5) an index of a first interlace by interlace0, if a UE is provided useInterlacePUCCH-PUSCH in BWP-UplinkDedicated; 6) if provided, an index of a second interlace by interlace 1, if a UE is provided useInterlacePUCCH-PUSCH in BWP-UplinkDedicated; 7) an index of an RB set by rb-SetIndex, if a UE is provided useInterlacePUCCH-PUSCH in BWP-UplinkDedicated; and 8) a configuration for a PUCCH format provided by format.

In various embodiments, the UE expects that useInterlacePUCCH-PUSCH in BWP-UplinkCommon and useInterlacePUCCH-PUSCH in BWP-UplinkDedicated are provided either in all UL BWPs or in none of the UL BWPs for a serving cell.

If a UE is provided useInterlacePUCCH-PUSCH in BWP-UplinkDedicated, the UE determines available RBs for PUCCH transmissions within the active UL BWP as the intersection of RBs corresponding to an interlace index provided by interlace0 and, if provided, interlace1, and RBs of an RB set provided by rb-SetIndex. The intersection results in $M_{\text{interlace},0}^{\text{PUCCH}}$ RBs in the first interlace and the UE expects that $M_{\text{interlace},0}^{\text{PUCCH}}$ is either 10 or 11. If interlace1 is provided, the intersection results in $M_{\text{interlace},1}^{\text{PUCCH}}$ RBs in the second interlace and the UE expects that $M_{\text{interlace},1}^{\text{PUCCH}}$ is either 10 or 11.

If a UE is provided subslotLengthForPUCCH-r16 in a PUCCH-Config, the first symbol of a PUCCH resource in PUCCH-Config for multiplexing HARQ-ACK in a PUCCH transmission is relative to the first symbol of the subslotLengthForPUCCH-r16 symbols. For the remaining cases, the first symbol of a PUCCH resource is relative to the first symbol of a slot with $N_{\text{sym}}^{\text{slot}}$ symbols.

A UE may be configured up to four sets of PUCCH resources. A PUCCH resource set is provided by PUCCH-ResourceSet and is associated with a PUCCH resource set index provided by pucch-ResourceSetId, with a set of PUCCH resource indexes provided by resourceList that provides a set of pucch-ResourceId used in the PUCCH resource set, and with a maximum number of uplink control information ("UCI") information bits the UE can transmit using a PUCCH resource in the PUCCH resource set provided by maxPayloadSize. For the first PUCCH resource set, the maximum number of UCI information bits is 2. A maximum number of PUCCH resource indexes for a set of PUCCH resources is provided by maxNrofPUCCH-ResourcesPerSet. The maximum number of PUCCH resources in the first PUCCH resource set is 32 and the maximum number of PUCCH resources in the other PUCCH resource sets is 8.

If the UE transmits $O_{\text{UCI}}$ UCI information bits, that include HARQ-ACK information bits, the UE determines a PUCCH resource set to be: 1) a first set of PUCCH resources with pucch-ResourceSetId = 0 if $O_{\text{UCI}} \leq 2$ including 1 or 2 HARQ-ACK information bits and a positive or negative scheduling resource ("SR") on one SR transmission occasion if transmission of HARQ-ACK information and SR occurs simultaneously; 2) a second set of PUCCH resources with pucch-ResourceSetId = 1, if provided by higher layers, if $2 < O_{\text{UCI}} \leq N_2$ where $N_2$ is equal to maxPayloadSize if maxPayloadSize is provided for the PUCCH resource set with pucch-ResourceSetId = 1; otherwise $N_2$ is equal to 1706; 3) a third set of PUCCH resources with pucch-ResourceSetId = 2, if provided by higher layers, if $N_2 < O_{\text{UCI}} \leq N_3$ where $N_3$ is equal to maxPayloadSize if maxPayloadSize is provided for the PUCCH resource set with pucch-ResourceSetId = 2; otherwise $N_3$ is equal to 1706; and/or 4) a fourth set of PUCCH resources with pucch-ResourceSetId = 3, if provided by higher layers, if $N_3 < O_{\text{UCI}} \leq 1706$.

If the UE is provided SPS-PUCCH-AN-List-r16 and transmits $O_{\text{UCI}}$ UCI information bits that include only HARQ-ACK information bits in response to one or more SPS PDSCH receptions, the UE determines a PUCCH resource to be: 1) a PUCCH resource provided by sps-PUCCH-AN-ResourceID obtained from the first entry in sps-PUCCH-AN-List-r16 if $O_{\text{UCI}} \leq 2$; 2) a PUCCH resource provided by sps-PUCCH-AN-ResourceID obtained from the second entry in sps-PUCCH-AN-List-r16, if provided, if $2 < O_{\text{UCI}} \leq N_{1,SPS}$ where $N_{1,SPS}$ is either provided by maxPayloadSize obtained from the second entry in sps-PUCCH-AN-List-r16 or is otherwise equal to 1706; 3) a PUCCH resource provided by sps-PUCCH-AN-ResourceID obtained from the third entry in sps-PUCCH-AN-List-r16, if provided, if $N_{1,SPS} < O_{\text{UCI}} \leq N_{2,SPS}$ where $N_{2,SPS}$ is either provided by maxPayloadSize obtained from the third entry in sps-PUCCH-AN-List-r16 or is otherwise equal to 1706; and/or 4) a PUCCH resource provided by sps-PUCCH-AN-ResourceID obtained from the fourth entry in sps-PUCCH-AN-List-r16, if provided, if $N_{2,SPS} < O_{\text{UCI}} \leq N_{3,SPS}$ where $N_{3,SPS}$ is equal to 1706.

In certain embodiments, there may be a UE procedure for reporting HARQ-ACK. A UE may not expect to transmit more than one PUCCH with HARQ-ACK information in a slot.

For DCI format 1_0, the PDSCH-to-HARQ_feedback timing indicator field values map to {1, 2, 3, 4, 5, 6, 7, 8}. For a DCI format, other than DCI format 1_0, scheduling a PDSCH reception or a SPS PDSCH release, the PDSCH-to-HARQ_feedback timing indicator field values, if present, map to values for a set of number of slots provided by dl-DataToUL-ACK, or dl-DataToUL-ACKForDCIFormat1_2 for DCI format 1_2.

For a SPS PDSCH reception ending in slot $n$, the UE transmits the PUCCH in slot $n+k$ where $k$ is provided by the PDSCH-to-HARQ_feedback timing indicator field, if present, in a DCI format activating the SPS PDSCH reception.

If the UE detects a DCI format that does not include a PDSCH-to-HARQ_feedback timing indicator field and schedules a PDSCH reception or activates a SPS PDSCH reception ending in slot $n$, the UE provides corresponding HARQ-ACK information in a PUCCH transmission within slot $n+k$ where $k$ is provided by dl-DataToUL-ACK, or by dl-DataToUL-ACKForDCIFormat1_2 for DCI format 1_2.

With reference to slots for PUCCH transmissions, if the UE detects a DCI format scheduling a PDSCH reception ending in slot n or if the UE detects a DCI format indicating a SPS PDSCH release through a PDCCH reception ending in slot n, or if the UE detects a DCI format that requests Type-3 HARQ-ACK codebook report and does not schedule a PDSCH reception through a PDCCH reception ending in slot n, as described in Clause 9.1.4, the UE provides corresponding HARQ-ACK information in a PUCCH transmission within slot $n + k$, where $k$ is a number of slots and is indicated by the PDSCH-to-HARQ_feedback timing indicator field in the DCI format, if present, or provided by dl-DataToUL-ACK, or by dl-DataToUL-ACKForDCIFormat1_2 for DCI format 1_2. $k = 0$ corresponds to the last slot of the PUCCH transmission that overlaps with the PDSCH reception or with the PDCCH reception in case of SPS PDSCH release or in case of the DCI format that requests Type-3 HARQ-ACK codebook report and does not schedule a PDSCH reception. A PUCCH transmission with HARQ-ACK information may be subject to various limitations for UE transmissions.

For a PUCCH transmission with HARQ-ACK information, a UE determines a PUCCH resource after determining a set of PUCCH resources for $O_{UCI}$ HARQ-ACK information bits. The PUCCH resource determination is based on a PUCCH resource indicator field, if present, in a last DCI format, among the DCI formats that have a value of a PDSCH-to-HARQ_feedback timing indicator field, if present, or a value of dl-DataToUL-ACK, or a value of dl-DataToUL-ACKForDCIFormat1_2 for DCI format 1_2, indicating a same slot for the PUCCH transmission, that the UE detects and for which the UE transmits corresponding HARQ-ACK information in the PUCCH where, for PUCCH resource determination, detected DCI formats are first indexed in an ascending order across serving cells indexes for a same PDCCH monitoring occasion and are then indexed in an ascending order across PDCCH monitoring occasion indexes. For indexing DCI formats within a serving cell for a same PDCCH monitoring occasion, if the UE is not provided CORESETPoolIndex or is provided CORESETPoolIndex with value 0 for one or more first CORESETs and is provided CORESETPoolIndex with value 1 for one or more second CORESETs on an active DL BWP of a serving cell, and with ackNackFeedbackMode-r16 = joint for the active UL BWP, detected DCI formats from PDCCH receptions in the first CORESETs are indexed prior to detected DCI formats from PDCCH receptions in the second CORESETs.

The PUCCH resource indicator field values map to values of a set of PUCCH resource indexes for a PUCCH resource indicator field of 3 bits, provided by resourceList for PUCCH resources from a set of PUCCH resources provided by PUCCH-ResourceSet with a maximum of eight PUCCH resources.

For the first set of PUCCH resources and when the size $R_{PUCCH}$ of resourceList is larger than eight, when a UE provides HARQ-ACK information in a PUCCH transmission in response to detecting a last DCI format in a PDCCH reception, among DCI formats with a value of the PDSCH-to-HARQ_feedback timing indicator field, if present, or a value of dl-DataToUL-ACK, or a value of dl-DataToUL-ACKForDCIFormat1_2 for DCI format 1_2, indicating a same slot for the PUCCH transmission, the UE determines a PUCCH resource with index $r_{PUCCH}$, $0 \leq r_{PUCCH} \leq R_{PUCCH}-1$ , as:

$$r_{PUCCH} = \begin{cases} \left\lfloor \dfrac{n_{CCE,p} \cdot \left\lceil R_{PUCCH}/8 \right\rceil}{N_{CCE,p}} \right\rfloor + \Delta_{PRI} \cdot \left\lceil \dfrac{R_{PUCCH}}{8} \right\rceil & \text{if} \quad \Delta_{PRI} < R_{PUCCH} \bmod 8 \\ \left\lfloor \dfrac{n_{CCE,p} \cdot \left\lfloor R_{PUCCH}/8 \right\rfloor}{N_{CCE,p}} \right\rfloor + \Delta_{PRI} \cdot \left\lfloor \dfrac{R_{PUCCH}}{8} \right\rfloor + R_{PUCCH} \bmod 8 & \text{if} \quad \Delta_{PRI} \geq R_{PUCCH} \bmod 8 \end{cases}$$

, where $N_{CCE,p}$ is a number of CCEs in CORESET $p$ of the PDCCH reception for a DCI format, $n_{CCE,p}$ is the index of a first CCE for the PDCCH reception, and $\Delta_{PRI}$ is a value of the PUCCH resource indicator field in the DCI format. If the DCI format does not include a PUCCH resource indicator field, $\Delta_{PRI} = 0$.

If a UE detects a first DCI format indicating a first resource for a PUCCH transmission with corresponding HARQ-ACK information in a slot and also detects at a later time a second DCI format indicating a second resource for a PUCCH transmission with corresponding HARQ-ACK information in the slot, the UE does not expect to multiplex HARQ-ACK information corresponding to the second DCI format in a PUCCH resource in the slot if the PDCCH reception that includes the second DCI format is not earlier than $N_3 \cdot (2048+144) \cdot \kappa \cdot 2^{-\mu} \cdot T_C$ from the beginning of a first symbol of the first resource for PUCCH transmission in the slot where, $\kappa$ and $T_c$ are defined and $\mu$ corresponds to the smallest SCS configuration among the SCS configurations of the PDCCHs providing the DCI formats and the SCS configuration of the PUCCH. If processingType2Enabled of PDSCH-ServingCellConfig is set to enable for the serving cell with the second DCI format and for all serving cells with corresponding HARQ-ACK information multiplexed in the PUCCH transmission in the slot, $N_3 = 3$

for $\mu = 0$, $N_3 = 4.5$ for $\mu = 1$, $N_3 = 9$ for $\mu = 2$; otherwise , $N_3 = 8$ for $\mu = 0$, $N_3 = 10$ for $\mu = 1$, $N_3 = 17$ for $\mu = 2$, $N_3 = 20$ for $\mu = 3$.

If a UE is not provided SPS-PUCCH-AN-List and transmits HARQ-ACK information corresponding only to a PDSCH reception without a corresponding PDCCH, a PUCCH resource for corresponding PUCCH transmission with HARQ-ACK information is provided by n1PUCCH-AN.

If a UE transmits a PUCCH with $O_{ACK}$ HARQ-ACK information bits and $O_{CRC}$ bits using PUCCH format 2 or PUCCH format 3 in a PUCCH resource that includes $M_{RB}^{PUCCH}$ PRBs, the UE determines a number of PRBs $M_{RB,min}^{PUCCH}$ for the PUCCH transmission to be the minimum number of PRBs, that is smaller than or equal to a number of PRBs $M_{RB}^{PUCCH}$ provided respectively by nrofPRBs of PUCCH-format2 or nrofPRBs of PUCCH-format3 and start from the first PRB from the number of PRBs, that results to $\left(O_{ACK} + O_{CRC}\right) \leq M_{RB,min}^{PUCCH} \cdot N_{sc,ctrl}^{RB} \cdot N_{symb\text{-}UCI}^{PUCCH} \cdot Q_m \cdot r$ and, if

$M_{RB}^{PUCCH} > 1$, $\left(O_{ACK} + O_{CRC}\right) > \left(M_{RB,min}^{PUCCH} - 1\right) \cdot N_{sc,ctrl}^{RB} \cdot N_{symb\text{-}UCI}^{PUCCH} \cdot Q_m \cdot r$ , where $N_{sc,ctrl}^{RB}$, $N_{symb\text{-}UCI}^{PUCCH}$ , $Q_m$, and $r$ are defined in Clause 9.2.5.2. For PUCCH format 3, if $M_{RB,min}^{PUCCH}$ is not equal $2^{\alpha2} \cdot 3^{\alpha3} \cdot 5^{\alpha5}$, $M_{RB,min}^{PUCCH}$ is increased to the nearest allowed value of nrofPRBs for PUCCH-format3. If $\left(O_{ACK} + O_{CRC}\right) > \left(M_{RB}^{PUCCH} - 1\right) \cdot N_{sc,ctrl}^{RB} \cdot N_{symb\text{-}UCI}^{PUCCH} \cdot Q_m \cdot r$ , the UE transmits the PUCCH over $M_{RB}^{PUCCH}$ PRBs.

If a UE is provided a first interlace of $M_{Interlace,0}^{PUCCH}$ PRBs by interlace0 in InterlaceAllocation-rl6 and transmits a PUCCH with $O_{ACK}$ HARQ-ACK information bits and $O_{CRC}$ bits using PUCCH format 2 or PUCCH format 3, the UE transmits the PUCCH over the first interlace if $\left(O_{ACK} + O_{CRC}\right) \leq M_{Interlace,0}^{PUCCH} \cdot N_{sc,ctrl}^{RB} \cdot N_{symb\text{-}UCI}^{PUCCH} \cdot Q_m \cdot r$ ; otherwise, if the UE is provided a second interlace by interlace1 in PUCCH-format2 or PUCCH-format3, the UE transmits the PUCCH over the first and second interlaces.

In various embodiments, there may be transmission and reception without dynamic scheduling. In certain embodiments, such as for DL, SPS may be configured by radio resource control ("RRC") signaling per serving cell and per BWP. Multiple assignments may be active simultaneously in the same BWP. Activation and deactivation of the DL SPS are independent among serving cells.

For the DL SPS, a DL assignment is provided by PDCCH, and stored or cleared based on L1 signaling indicating SPS activation or deactivation.

In some embodiments, RRC signaling configures the following parameters when the SPS is configured: 1) cs-RNTI: CS-RNTI for activation, deactivation, and retransmission; 2) nrofHARQ-Processes: the number of configured HARQ processes for SPS; 3) harq-ProcID-Offset: Offset of HARQ process for SPS; and/or 4) periodicity: periodicity of configured downlink assignment for SPS.

When the SPS is released by upper layers, all the corresponding configurations shall be released. After a downlink assignment is configured for SPS, the MAC entity shall consider sequentially that the Nth downlink assignment occurs in the slot for which: (numberOf5lotsPerFrame × SFN + slot number in the frame) = [(numberOfSlotsPerFrame × SFNstart time + slotstart time) + N × periodicity × numberOfSlotsPerFrame / 10] modulo (1024 × numberOfSlotsPerFrame), where SFNstart time and slotstart time are the SFN and slot, respectively, of the first transmission of PDSCH where the configured downlink assignment was (re-)initialized. For unaligned SFN across carriers in a cell group, the SFN of the concerned Serving Cell is used to calculate the occurrences of configured downlink assignments.

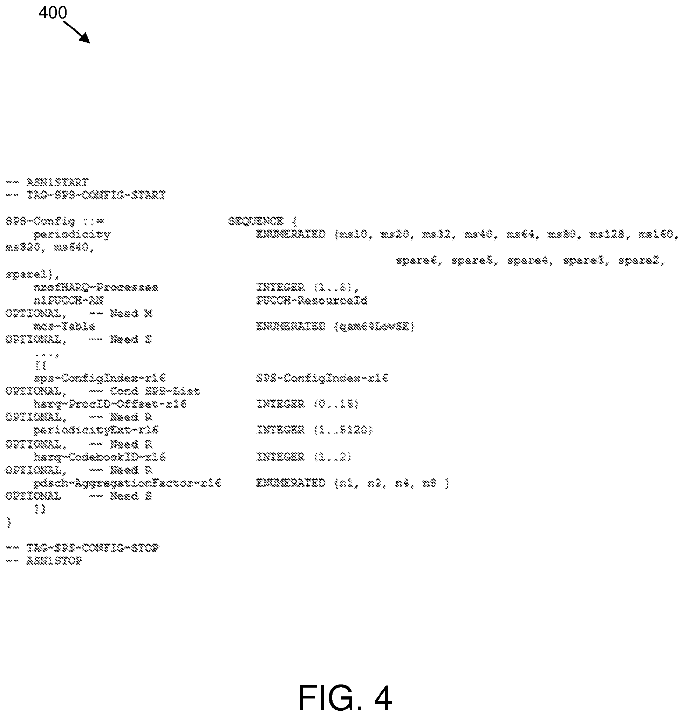

In various embodiments, an information element ("IE") SPS-Config may be used to configure downlink semi-persistent transmission. Multiple downlink SPS configurations may be configured in one BWP of a serving cell. Figure 4 is a diagram illustrating one embodiment of an SPS-Config IE 400 and Table 1 illustrates SPS-Config field descriptions.

Table 1: SPS-Config Field Descriptions

| *SPS-Config* field descriptions |
|---|
| *harq-CodebookID*<br>Indicates the HARQ-ACK codebook index for the corresponding HARQ-ACK codebook for SPS PDSCH and ACK for SPS PDSCH release. |
| *harq-ProcID-Offset*<br>Indicates the offset used in deriving the HARQ process IDs, see TS 38.321 [3], clause 5.3.1. |
| *mcs-Table* |

(continued)

| SPS-Config field descriptions |
|---|
| Indicates the MCS table the UE shall use for DL SPS (see TS 38.214 [19],clause 5.1.3.1. If present, the UE shall use the MCS table of low-SE 64QAM table indicated in Table 5.1.3.1-3 of TS 38.214 [19]. If this field is absent and field mcs-table in PDSCH-Config is set to 'qam256' and the activating DCI is of format 1_1, the UE applies the 256QAM table indicated in Table 5.1.3.1-2 of TS 38.214 [19]. Otherwise, the UE applies the non-low-SE 64QAM table indicated in Table 5.1.3.1-1 of TS 38.214 [19]. |
| *n1PUCCH-AN*<br>HARQ resource for PUCCH for DL SPS. The network configures the resource either as format0 or format1. The actual *PUCCH-Resource* is configured in *PUCCH-Config* and referred to by its ID. See TS 38.213 [13], clause 9.2.3. |
| *nrofHARQ-Processes*<br>Number of configured HARQ processes for SPS DL (see TS 38.321 [3], clause 5.8.1). |
| *pdsch-AggregationFactor*<br>Number of repetitions for SPS PDSCH (see TS 38.214 [19], clause 5.1.2.1). When the field is absent, the UE applies PDSCH aggregation factor of PDSCH-Config. |
| *periodicity*<br>Periodicity for DL SPS (see TS 38.214 [19] and TS 38.321 [3], clause 5.8.1). |
| *periodicityExt*<br>This field is used to calculate the periodicity for DL SPS (see TS 38.214 [19] and see TS 38.321 [3], clause 5,8.1). If this field is present, the field *periodicity* is ignored.<br>The following periodicities are supported depending on the configured subcarrier spacing [ms]:<br>15 kHz: *periodicityExt,* where *periodicityExt* has a value between 1 and 640.<br>30 kHz: 0.5 x *periodicityExt,* where *periodicityExt* has a value between 1 and 1280.<br>60 kHz with normal CP: 0.25 x *periodicityExt,* where *periodicityExt* has a value between 1 and 2560.<br>60 kHz with ECP: 0.25 x *periodicityExt,* where *periodicityExt* has a value between 1 and 2560.<br>120 kHz: 0.125 x *periodicityExt,* where *periodicityExt* has a value between 1 and 5120. |
| *sps-ConfigIndex*<br>Indicates the index of one of multiple SPS configurations. |

In certain embodiments, there may be a HARQ-ACK codebook for deferred HARQ-ACK. It should be noted that one or more elements or features from one or more of the described embodiments may be combined.

In a first embodiment, there may be an aggregation of separate HARQ-ACK codebooks. In one embodiment, if a UE has a delayed HARQ-ACK codebook associated with a previous PUCCH occasion (e.g., a previous HARQ-ACK feedback occasion) and if the UE is scheduled to transmit HARQ-ACK information on a current PUCCH occasion (e.g., a current HARQ-ACK feedback occasion), the UE constructs a current HARQ-ACK codebook based on the HARQ-ACK information scheduled on the current PUCCH occasion, and then concatenates the delayed HARQ-ACK codebook and the current HARQ-ACK codebook to construct an aggregated HARQ-ACK codebook. That is, the current HARQ-ACK codebook is constructed without considering the delayed HARQ-ACK codebook. The UE transmits the aggregated HARQ-ACK codebook on a PUCCH resource of the current PUCCH occasion, if the PUCCH resource of the current PUCCH occasion is available to be used for transmission. The UE may further multiplex the aggregated HARQ-ACK codebook into another PUCCH resource or a physical uplink shared channel ("PUSCH") resource overlapping with the PUCCH resource of the current PUCCH occasion, if one or more multiplexing timeline conditions (e.g., as described herein) are met.

In certain embodiments, a current HARQ-ACK codebook may be constructed only based on HARQ-ACK information scheduled on the current PUCCH occasion and may reduce UE complexity since the UE does not have to reorder HARQ-ACK information scheduled on the previous PUCCH occasion. The UE may attach (e.g., prepend or append) the delayed HARQ-ACK codebook to the current HARQ-ACK codebook to generate an aggregated HARQ-ACK codebook. In some examples, the aggregated HARQ-ACK codebook includes the current HARQ-ACK codebook and the delayed HARQ-ACK codebook.

In one example, if a UE is configured with one or more SPS PDSCH configurations, if the UE has a delayed HARQ-ACK codebook associated with a previous PUCCH occasion, where the delayed HARQ-ACK codebook includes only HARQ-ACK for a first SPS PDSCH reception without a corresponding PDCCH (e.g., no PDSCH reception with a corresponding PDCCH, no dynamically scheduled PDSCH), and if a current HARQ-ACK codebook scheduled on a current PUCCH occasion includes only HARQ-ACK for a second SPS PDSCH reception without a corresponding PDCCH (e.g., no PDSCH reception with a corresponding PDCCH), then the UE concatenates (e.g., prepend or append) the delayed HARQ-ACK codebook to the current HARQ-ACK codebook. For both the delayed HARQ-ACK codebook and the current HARQ-ACK codebook, HARQ-ACK bits for SPS PDSCH receptions without corresponding PDCCHs are ordered in each HARQ-ACK codebook such that in ascending order of DL slot per SPS configuration index per serving cell index, and then in ascending order of SPS configuration index per serving cell index, and then in ascending order of serving cell index.

In another example, if a UE is configured with one or more SPS PDSCH configurations and configured with type-1 (e.g., semi-static) HARQ-ACK codebook, if the UE has a delayed HARQ-ACK codebook associated with a previous PUCCH occasion and a current HARQ-ACK codebook scheduled on a current PUCCH occasion, and if one of the HARQ-ACK codebooks comprises only HARQ-ACK for a SPS PDSCH reception without a corresponding PDCCH (e.g., no PDSCH reception with a corresponding PDCCH) and the other HARQ-ACK codebook includes at least HARQ-ACK for a PDSCH or SPS PDSCH reception with a corresponding PDCCH or a PDCCH indicating a SPS PDSCH release, then the UE concatenates (e.g., prepends or appends) the delayed HARQ-ACK codebook to the current HARQ-ACK codebook.

For the HARQ-ACK codebook for the SPS PDSCH receptions without the corresponding PDCCHs, HARQ-ACK bits for SPS PDSCH receptions without corresponding PDCCHs are ordered such that in ascending order of DL slot per SPS configuration index per serving cell index, and then in ascending order of SPS configuration index per serving cell index, and then in ascending order of serving cell index.

For the HARQ-ACK codebook including the at least HARQ-ACK for the PDSCH or SPS PDSCH receptions with the corresponding PDCCHs or the PDCCH indicating a SPS PDSCH release, a HARQ-ACK bit location for a SPS PDSCH reception is derived based on a row index of an applicable time domain resource allocation ("TDRA") table and a K1 value indicated by a PDSCH-to-HARQ feedback timing indicator field in a downlink control information ("DCI") format of SPS PDSCH activation. A HARQ-ACK bit location for a SPS PDSCH release with a separate release DCI format is derived based on the row index of the TDRA table indicated in the activation DCI format and a K1 value indicated by a PDSCH-to-HARQ feedback timing indicator field in the separate release DCI format. A HARQ-ACK bit location for a SPS PDSCH release with a joint release DCI format is derived based on a row index of the TDRA table indicated in an activation DCI format for SPS PDSCH with the lowest SPS configuration index among jointly released configurations and a K1 value indicated by a PDSCH-to-HARQ feedback timing indicator field in the joint release DCI format. If a DCI format does not include a PDSCH-to-HARQ feedback timing indicator field, the UE determines the K1 value based on the high-layer parameter dl-DataToUL-ACK or dl-DataToUL-ACKForDCIFormat1_2.

If the UE is configured with type-2 (e.g., dynamic) HARQ-ACK codebook, for the HARQ-ACK codebook including the at least HARQ-ACK for the PDSCH or SPS PDSCH receptions with the corresponding PDCCHs or the PDCCH indicating a SPS PDSCH release, a HARQ-ACK bit order for a SPS PDSCH release with a separate and/or joint release DCI format is derived based on a downlink assignment index ("DAI") and a K1 value indicated by a PDSCH-to-HARQ feedback timing indicator field in the release DCI format. A HARQ-ACK bit order for a SPS PDSCH with a corresponding PDCCH is derived based on a DAI and a K1 value indicated in the PDCCH (e.g., PDCCH including an activation DCI format). HARQ-ACK bits for SPS PDSCH receptions without a corresponding PDCCH is appended after HARQ-ACK bits for dynamically scheduled PDSCHs and/or for a SPS PDSCH releases. The HARQ-ACK bits for SPS PDSCH receptions without corresponding PDCCHs are ordered such that in ascending order of DL slot per SPS configuration index per serving cell index, and then in ascending order of SPS configuration index per serving cell index, and then in ascending order of serving cell index.

In yet another example, if a UE is configured with one or more SPS PDSCH configurations and configured with type-1 (e.g., semi-static) or type-2 (e.g., dynamic) HARQ-ACK codebook, if the UE has a delayed HARQ-ACK codebook associated with a previous PUCCH occasion and a current HARQ-ACK codebook scheduled on a current PUCCH occasion, and if each of the HARQ-ACK codebooks include at least HARQ-ACK for a PDSCH or SPS PDSCH receptions with a corresponding PDCCHs or a PDCCH indicating a SPS PDSCH release, then the UE concatenates (e.g., prepends or appends) the delayed HARQ-ACK codebook to the current HARQ-ACK codebook to construct an aggregated HARQ-ACK codebook for transmission. Each HARQ-ACK codebook is separately constructed according to rules of the configured HARQ-ACK codebook type as found herein.

In other examples, a delayed HARQ-ACK codebook and/or a current HARQ-ACK codebook may include HARQ-ACK information corresponding only to at least one PDSCH reception without a corresponding PDCCH.

In one implementation, a UE may exclude some of HARQ-ACK bits of a delayed HARQ-ACK codebook, which results in a modified delayed HARQ-ACK codebook, and may attach the modified delayed HARQ-ACK codebook to a current HARQ-ACK codebook to generate the aggregated HARQ-ACK codebook. The modified delayed HARQ-ACK codebook has a smaller size than the delayed HARQ-ACK codebook so that the aggregated HARQ-ACK codebook may be transmitted on a PUCCH resource of a current PUCCH occasion, where the PUCCH resource is a PUCCH resource of a PUCCH resource set and the PUCCH resource set is selected based on a size of the aggregated HARQ-ACK codebook.

The size of the aggregated HARQ-ACK codebook is not expected to be larger than a maxPayloadSize of a PUCCH resource set accommodating the largest size of UCI bits among configured PUCCH resource sets.

In one example, a UE may receive information of a subset of serving cells for which the UE can defer HARQ-ACK feedback, if a PUCCH occasion for the HARQ-ACK feedback is not available for transmission (or in another example, the PUCCH occasion cannot accommodate the HARQ-ACK feedback on the PUCCH resource). When the UE constructs an aggregated HARQ-ACK codebook based on a delayed HARQ-ACK codebook and a current HARQ-ACK codebook, the UE includes the current HARQ-ACK codebook and only HARQ-ACK bits corresponding to the subset of serving cells from the delayed HARQ-ACK codebook in the aggregated HARQ-ACK codebook.

In another example, a UE may receive information of a subset of SPS PDSCH configurations of a serving cell for which the UE can defer HARQ-ACK feedback when a PUCCH occasion for the HARQ-ACK feedback is not available for transmission. When the UE constructs an aggregated HARQ-ACK codebook based on a delayed HARQ-ACK codebook and a current HARQ-ACK codebook, the UE includes the current HARQ-ACK codebook and only HARQ-ACK bits corresponding to the subset of SPS PDSCH configurations of the serving cell from the delayed HARQ-ACK codebook in the aggregated HARQ-ACK codebook.

In other examples, a delayed HARQ-ACK codebook includes high-priority HARQ-ACK information and low-priority HARQ-ACK information, or HARQ-ACK information associated with a previous PUCCH occasion (e.g., a previous HARQ-ACK feedback occasion) includes two HARQ-ACK codebooks, a first HARQ-ACK codebook with a high priority and a second HARQ-ACK codebook with a low priority. In this case, a UE may receive an indication of whether to multiplex both the high priority HARQ-ACK information (or the first HARQ-ACK codebook) and the low priority HARQ-ACK information (or the second HARQ-ACK codebook) into a current PUCCH occasion or to multiplex only the high priority HARQ-ACK information (or the first HARQ-ACK codebook) into the current PUCCH occasion. The indication may be a semi-static configuration via an RRC parameter or a dynamic indication indicated in the last detected DCI scheduling the current PUCCH occasion.

In one example, a UE may determine the subset of deferred HARQ-ACK feedback according to one or more of: 1) a pre-determined (e.g., such as a UE capability signaling) number of possible deferred HARQ-ACK feedback; 2) original and/or previous PUCCH occasion associated with each deferred HARQ-ACK feedback; 3) cell index, cell group index, or carrier index or BWP index associated with each deferred HARQ-ACK feedback; 4) code block group ("CBG") index associated with each deferred HARQ-ACK feedback; and/or 5) reason for delaying (e.g., deferring) each HARQ-ACK feedback (e.g., PUCCH resource unavailability due to overlap of the original and/or previous PUCCH resource with: a) DL symbols, b) a (high priority) UL transmission; or c) outside of gNB and/or UE COT).

In another example, a UE sends an indication to the network, wherein the indication includes information regarding the deferred HARQ-ACK feedback (e.g., the subset of deferred HARQ-ACK feedback), which may include: 1) a cut-off time, an offset in unit of slot, sub-slot, and/or time unit (e.g., with respect to a current PUCCH resource) - in an example, the offset is chosen from a set of possible offsets (e.g., the set of offset values are RRC configured)); 2) a number of deferred HARQ-ACK feedback included; and/or 3) whether the deferred HARQ-ACK feedback is concatenated (e.g., prepended or appended) in the aggregated HARQ-ACK codebook or whether the deferred HARQ-ACK feedback is included or excluded in the aggregated HARQ-ACK codebook.

In various examples, a subset of deferred HARQ-ACK feedback are bundled together (e.g., one bit HARQ-ACK feedback indicates whether all the HARQ-ACK in the subset are ACK or at least one of them is NACK).

In a second embodiment, there may be a joint HARQ-ACK codebook based on deferred and current HARQ-ACK information. In some embodiments, if a UE has first HARQ-ACK information associated with a previous PUCCH occasion (e.g., a previous HARQ-ACK feedback occasion) and if the UE is scheduled to transmit second HARQ-ACK information on a current PUCCH occasion (e.g., a current HARQ-ACK feedback occasion), the UE constructs a current HARQ-ACK codebook based on the first HARQ-ACK information and the second HARQ-ACK information for transmission on the current PUCCH occasion. That is, the delayed first HARQ-ACK information and the second HARQ-ACK information scheduled on the current PUCCH occasion are multiplexed and ordered according to HARQ-ACK bit ordering rules of a configured HARQ-ACK codebook type.

In one example, for joint HARQ-ACK codebook (or aggregated codebook), the UE is not expected to include, in the current PUCCH, HARQ-ACK feedback corresponding to a K1 (e.g., PDSCH-to-HARQ feedback timing) value that is less than a K1_min value, wherein K1_min is configured when joint HARQ-ACK codebook is configured or K1_min is indicated (e.g., via scheduling DCI or group-common DCI or medium access control ("MAC") control element ("CE") ("MAC-CE") indication).

In one implementation, a UE, if configured with a type-1 (e.g., semi-static) HARQ-ACK codebook, receives information of an extended set of slot timing values, $K_1'$, provided by dl-DataToUL-ACK-extended or dl-DataToUL-ACKForDCIFormat1_2-extended in addition to information of a set of slot timing values, $K_1$, provided by dl-DataToUL-ACK or dl-DataToUL-ACKForDCIFormat1_2, where the extended set of slot timing values includes the set of slot timing values. If the UE constructs a HARQ-ACK codebook taking into account delayed HARQ-ACK information associated with a previous PUCCH occasion together with HARQ-ACK information scheduled on a current PUCCH occasion, the UE determines a set of $M_{A,c}$ occasions for candidate PDSCH receptions or SPS PDSCH releases based on the extended set of slot timing values $K_1'$ instead of based on the set of slot timing values $K_1$. Further, the UE orders the HARQ-ACK information based on an index of slot timing values $K_{1,k}'$ in descending order of the slot timing values in set $K_1'$ for a given serving cell. A location in the Type-1 HARQ-ACK codebook for HARQ-ACK information corresponding to a single SPS PDSCH release is same as for a corresponding SPS PDSCH reception. A location in the Type-1 HARQ-ACK codebook for HARQ-ACK information corresponding to multiple SPS PDSCH releases by a single DCI format is same as for a corresponding SPS PDSCH reception with the lowest SPS configuration index among the multiple SPS PDSCH releases.

In an example related to the certain embodiments, the UE does not include certain slots in the time span of the codebook (e.g., the time span is determined according to dl-DataToUL-ACK-extended but the UE does not provide HARQ-ACK feedback associated to the certain slots; the location and/or size of the set of certain slots is known to both UE and gNB; for instance, the HARQ-ACK codebook size in time domain is 4 slots, including slots x-5, x-2,x-1, and x in one example, and in another example, the HARQ-ACK codebook size in time domain is still 4 slots, including slots x-6, x-5, x-1, and x).

In another implementation, a UE, if configured with a type-2 (e.g., dynamic) HARQ-ACK codebook, orders deferred HARQ-ACK information (associated with a previous PUCCH occasion) for a PDSCH or SPS PDSCH receptions with corresponding PDCCHs or a PDCCH indicating a SPS PDSCH release, based on a DAI and a K1 value indicated by a PDSCH-to-HARQ feedback timing indicator field in the PDCCH. Further, the UE appends current HARQ-ACK information (associated with a current PUCCH occasion) for a PDSCH or SPS PDSCH receptions with corresponding PDCCHs or a PDCCH indicating a SPS PDSCH release, where the appended current HARQ-ACK information is ordered based on a DAI and a K1 value indicated in the PDCCH. Deferred HARQ-ACK information (associated with the previous PUCCH occasion) for SPS PDSCH receptions without a corresponding PDCCH is appended to the deferred and current HARQ-ACK information for dynamically scheduled PDSCHs and/or for a SPS PDSCH releases. Finally, current HARQ-ACK information (associated with the current PUCCH occasion) for SPS PDSCH receptions without a corresponding PDCCH is appended. The HARQ-ACK bits for SPS PDSCH receptions without corresponding PDCCHs are ordered such that in ascending order of DL slot per SPS configuration index per serving cell index, and then in ascending order of SPS configuration index per serving cell index, and then in ascending order of serving cell index. That is, the HARQ-ACK codebook may be constructed as follows: 1) deferred HARQ-ACK for dynamically scheduled PDSCHs and/or PDCCH indicating a SPS PDSCH release; 2) current HARQ-ACK for dynamically scheduled PDSCHs and/or PDCCH indicating a SPS PDSCH release; 3) deferred HARQ-ACK for SPS PDSCH; and/or 4) current HARQ-ACK for SPS PDSCH.

In one implementation, a UE may exclude some of HARQ-ACK bits of delayed and/or deferred HARQ-ACK information when constructing a joint HARQ-ACK codebook based on the delayed and/or deferred and current HARQ-ACK information. The examples regarding to determining a subset of deferred HARQ-ACK feedbacks among HARQ-ACK feedbacks not having been transmitted in one or more previous HARQ-ACK feedback occasions may be applicable to the joint HARQ-ACK codebook construction method (e.g., the second embodiment) and also to Type-3 HARQ-ACK codebook determination.

In a third embodiment, there may be an enhanced Type-3 HARQ-ACK codebook. In certain embodiments, a DCI format that includes a one-shot HARQ-ACK request field with value 1 may further include one or more bitfields indicating a cell index (or a cell group index), a slot and/or sub-slot index (or a slot/sub-slot group index), or a SPS PDSCH configuration index (or a SPS PDSCH configuration group index) for which a UE includes HARQ-ACK information in a requested Type-3 HARQ-ACK codebook transmission. In one implementation, existing bitfields in the DCI format may be repurposed for the above mentioned one or more bitfields indicating a cell, slot, and/or SPS configuration index if the Type-3 HARQ-ACK codebook report is requested.

For example, if one-shot HARQ-ACK request is present and set to '1', and all bits of frequency domain resource assignment are set to 0 for resource allocation type 0 or set to 1 for resource allocation type 1 or set to 0 or 1 for dynamic switch resource allocation type, the following fields are used for indication of one or more SPS PDSCH configurations for which HARQ-ACK feedback can be deferred, where each bit corresponds to one of the SPS PDSCH configurations, with most significant bit ("MSB") to least significant bit ("LSB") of the following fields concatenated in the order below corresponding to the SPS PDSCH configuration with lowest to highest SPS PDSCH configuration index: 1) modulation and coding scheme of transport block 1; 2) new data indicator of transport block 1; and/or 3) redundancy version of transport block 1.

In one embodiment, a current HARQ-ACK codebook is constructed without delayed HARQ-ACK information. An aggregated HARQ-ACK codebook for a current PUCCH occasion is constructed such that a delayed HARQ-ACK codebook including the delayed HARQ-ACK information is appended or prepended to the current HARQ-ACK codebook. In another embodiment, delayed HARQ-ACK information is jointly ordered with non-delayed HARQ-ACK information based on a configured HARQ-ACK codebook type. For semi-static HARQ-ACK codebook construction, a UE receives an extended set of slot timing values, $K_1'$ and determines a set of $M_{A,c}$ occasions for candidate PDSCH receptions or SPS PDSCH releases based on the extended set of slot timing values $K_1'$, where the extended set of slot timing values includes a set of slot timing values $K_1$, provided by *dl-DataToUL-ACK* or *dl-DataToUL-ACKForDCIFormat1_2*.

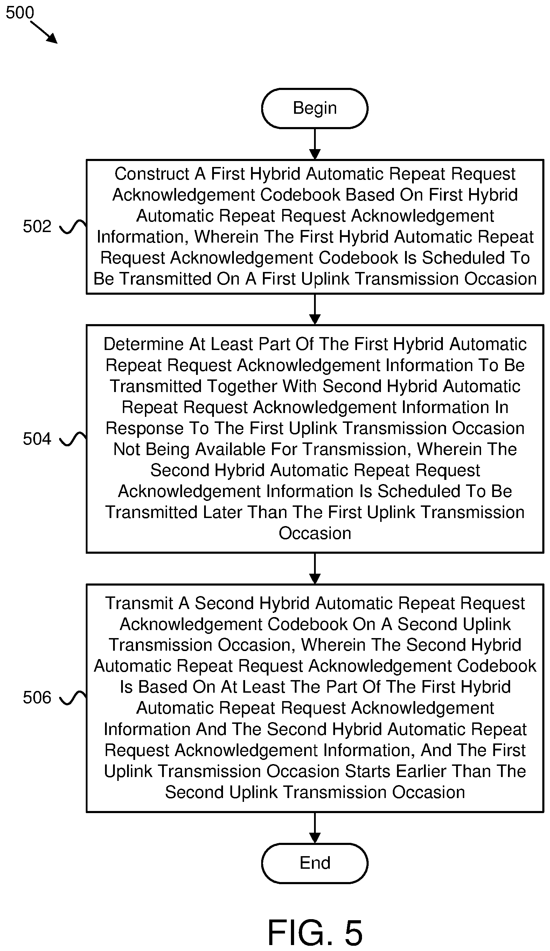

Figure 5 is a flow chart diagram illustrating one embodiment of a method 500 for HARQ-ACK codebook construction. In some embodiments, the method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

In various embodiments, the method 500 includes constructing 502 a first hybrid automatic repeat request acknowledgement codebook based on first hybrid automatic repeat request acknowledgement information. The first hybrid automatic repeat request acknowledgement codebook is scheduled to be transmitted on a first uplink transmission occasion. In some embodiments, the method 500 includes determining 504 at least part of the first hybrid automatic repeat request acknowledgement information to be transmitted together with second hybrid automatic repeat request acknowledgement information in response to the first uplink transmission occasion not being available for transmission. The second hybrid automatic repeat request acknowledgement information is scheduled to be transmitted later than the first uplink transmission occasion. In certain embodiments, the method 500 includes transmitting 506 a second hybrid automatic repeat request acknowledgement codebook on a second uplink transmission occasion. The second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

In certain embodiments, the method 500 further comprises detecting a downlink control information format requesting a transmission of the first hybrid automatic repeat request acknowledgement codebook on the second uplink transmission occasion, wherein transmitting the second hybrid automatic repeat request acknowledgement codebook comprises transmitting the second hybrid automatic repeat request acknowledgement codebook in response to detecting the downlink control information format. In some embodiments: the first hybrid automatic repeat request acknowledgement information comprises high-priority hybrid automatic repeat request acknowledgement information and low-priority hybrid automatic repeat request acknowledgement information; at least the part of the first hybrid automatic repeat request acknowledgement information to be transmitted together with the second hybrid automatic repeat request acknowledgement information is determined based on the detected downlink control information format; and the second hybrid automatic repeat request acknowledgement codebook comprises the high-priority hybrid automatic repeat request acknowledgement information and the second hybrid automatic repeat request acknowledgement information.

In various embodiments, the method 500 further comprises constructing the second hybrid automatic repeat request acknowledgement codebook by appending the first hybrid automatic repeat request acknowledgement codebook to a third hybrid automatic repeat request acknowledgement codebook, wherein the third hybrid automatic repeat request acknowledgement codebook is based on the second hybrid automatic repeat request acknowledgement information. In one embodiment, the first uplink transmission occasion is semi-statically configured. In certain embodiments: the first hybrid automatic repeat request acknowledgement information comprises hybrid automatic repeat request acknowledgement information of at least one semi-persistent scheduling physical downlink shared channel: and the at least one semi-persistent scheduling physical downlink shared channel is semi-persistently scheduled on at least one slot of at least one serving cell based on at least one semi-persistent scheduling configuration.

In some embodiments, the method 500 further comprises: receiving at least one deferring indication for a subset of semi-persistent scheduling configurations of the at least one semi-persistent scheduling configuration that hybrid automatic repeat request acknowledgement information of the subset of semi-persistent scheduling configurations can be deferred; wherein at least the part of the first hybrid automatic repeat request acknowledgement information is determined based on the at least one deferring indication and comprises hybrid automatic repeat request acknowledgement information of a subset of semi-persistent scheduling physical downlink shared channels of the at least one semi-persistent scheduling physical downlink shared channel, the subset of semi-persistent scheduling physical downlink shared channels corresponding to the subset of semi-persistent scheduling configurations.

In various embodiments, the method 500 further comprises detecting a downlink control information format requesting a transmission of a part of hybrid automatic repeat request acknowledgement information that the user equipment maintains on a third uplink transmission occasion, wherein the downlink control information format includes an indication of the part of the hybrid automatic repeat request acknowledgement information. In one embodiment, the part of the hybrid automatic repeat request acknowledgement information corresponds to hybrid automatic repeat request acknowledgement information of a subset of serving cells.

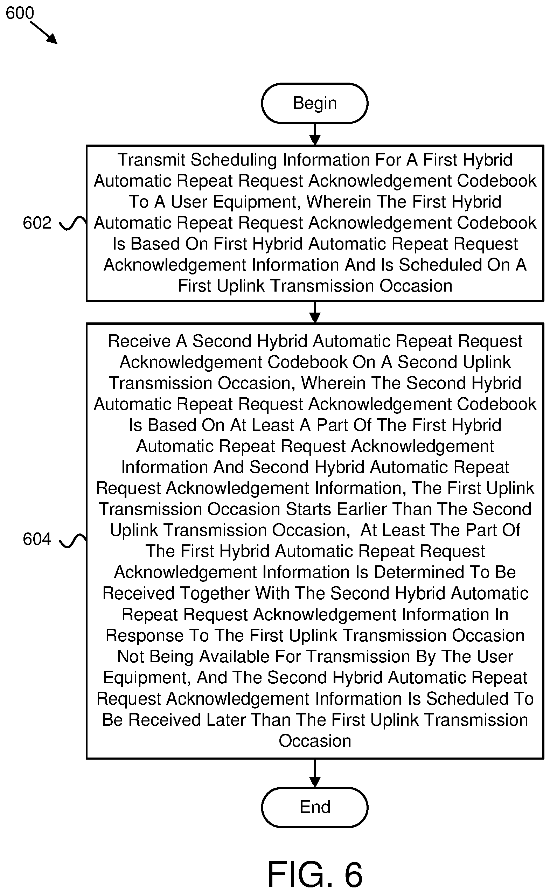

Figure 6 is a flow chart diagram illustrating another embodiment of a method 600 for HARQ-ACK codebook construction. In some embodiments, the method 600 is performed by an apparatus, such as the network unit 104. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes transmitting 602 scheduling information for a first hybrid automatic repeat request acknowledgement codebook to a user equipment. The first hybrid automatic repeat request acknowledgement codebook is based on first hybrid automatic repeat request acknowledgement information and is scheduled on a first uplink transmission occasion. In certain embodiments, the method 600 includes receiving 604 a second hybrid automatic repeat request acknowledgement codebook on a second uplink transmission occasion. The second hybrid automatic repeat request acknowledgement codebook is based on at least a part of the first hybrid automatic repeat request acknowledgement information and second hybrid automatic repeat request acknowledgement information, the first uplink transmission occasion starts earlier than the second uplink transmission occasion, at least the part of the first hybrid automatic repeat request acknowledgement information is determined to be received together with the second hybrid automatic repeat request acknowledgement information in response to the first uplink transmission occasion not being available for transmission by the user equipment, and the second hybrid automatic repeat request acknowledgement information is scheduled to be received later than the first uplink transmission occasion.

In certain embodiments, the first uplink transmission occasion is semi-statically configured. In some embodiments: the first hybrid automatic repeat request acknowledgement information comprises hybrid automatic repeat request acknowledgement information of at least one semi-persistent scheduling physical downlink shared channel; and the at least one semi-persistent scheduling physical downlink shared channel is semi-persistently scheduled on at least one slot of at least one serving cell based on at least one semi-persistent scheduling configuration.

In one embodiment, a method of a user equipment comprises: constructing a first hybrid automatic repeat request acknowledgement codebook based on first hybrid automatic repeat request acknowledgement information, wherein the first hybrid automatic repeat request acknowledgement codebook is scheduled to be transmitted on a first uplink transmission occasion; determining at least part of the first hybrid automatic repeat request acknowledgement information to be transmitted together with second hybrid automatic repeat request acknowledgement information in response to the first uplink transmission occasion not being available for transmission, wherein the second hybrid automatic repeat request acknowledgement information is scheduled to be transmitted later than the first uplink transmission occasion; and transmitting a second hybrid automatic repeat request acknowledgement codebook on a second uplink transmission occasion, wherein the second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

In certain embodiments, the method further comprises detecting a downlink control information format requesting a transmission of the first hybrid automatic repeat request acknowledgement codebook on the second uplink transmission occasion, wherein transmitting the second hybrid automatic repeat request acknowledgement codebook comprises transmitting the second hybrid automatic repeat request acknowledgement codebook in response to detecting the downlink control information format.

In some embodiments: the first hybrid automatic repeat request acknowledgement information comprises high-priority hybrid automatic repeat request acknowledgement information and low-priority hybrid automatic repeat request acknowledgement information; at least the part of the first hybrid automatic repeat request acknowledgement information to be transmitted together with the second hybrid automatic repeat request acknowledgement information is determined based on the detected downlink control information format; and the second hybrid automatic repeat request acknowledgement codebook comprises the high-priority hybrid automatic repeat request acknowledgement information and the second hybrid automatic repeat request acknowledgement information.

In various embodiments, the method further comprises constructing the second hybrid automatic repeat request acknowledgement codebook by appending the first hybrid automatic repeat request acknowledgement codebook to a third hybrid automatic repeat request acknowledgement codebook, wherein the third hybrid automatic repeat request acknowledgement codebook is based on the second hybrid automatic repeat request acknowledgement information.

In one embodiment, the first uplink transmission occasion is semi-statically configured.

In certain embodiments: the first hybrid automatic repeat request acknowledgement information comprises hybrid automatic repeat request acknowledgement information of at least one semi-persistent scheduling physical downlink shared channel; and the at least one semi-persistent scheduling physical downlink shared channel is semi-persistently scheduled on at least one slot of at least one serving cell based on at least one semi-persistent scheduling configuration.

In some embodiments, the method further comprises: receiving at least one deferring indication for a subset of semi-persistent scheduling configurations of the at least one semi-persistent scheduling configuration that hybrid automatic repeat request acknowledgement information of the subset of semi-persistent scheduling configurations can be deferred; wherein at least the part of the first hybrid automatic repeat request acknowledgement information is determined based on the at least one deferring indication and comprises hybrid automatic repeat request acknowledgement information of a subset of semi-persistent scheduling physical downlink shared channels of the at least one semi-persistent scheduling physical downlink shared channel, the subset of semi-persistent scheduling physical downlink shared channels corresponding to the subset of semi-persistent scheduling configurations.

In various embodiments, the method further comprises detecting a downlink control information format requesting a transmission of a part of hybrid automatic repeat request acknowledgement information that the user equipment maintains on a third uplink transmission occasion, wherein the downlink control information format includes an indication of the part of the hybrid automatic repeat request acknowledgement information.

In one embodiment, the part of the hybrid automatic repeat request acknowledgement information corresponds to hybrid automatic repeat request acknowledgement information of a subset of serving cells.

In one embodiment, an apparatus comprises a user equipment. The apparatus further comprises: a processor that: constructs a first hybrid automatic repeat request acknowledgement codebook based on first hybrid automatic repeat request acknowledgement information, wherein the first hybrid automatic repeat request acknowledgement codebook is scheduled to be transmitted on a first uplink transmission occasion; and determines at least part of the first hybrid automatic repeat request acknowledgement information to be transmitted together with second hybrid automatic repeat request acknowledgement information in response to the first uplink transmission occasion not being available for transmission, wherein the second hybrid automatic repeat request acknowledgement information is scheduled to be transmitted later than the first uplink transmission occasion; and a transmitter that transmits a second hybrid automatic repeat request acknowledgement codebook on a second uplink transmission occasion, wherein the second hybrid automatic repeat request acknowledgement codebook is based on at least the part of the first hybrid automatic repeat request acknowledgement information and the second hybrid automatic repeat request acknowledgement information, and the first uplink transmission occasion starts earlier than the second uplink transmission occasion.

In certain embodiments, the processor detects a downlink control information format requesting a transmission of the first hybrid automatic repeat request acknowledgement codebook on the second uplink transmission occasion, wherein transmitting the second hybrid automatic repeat request acknowledgement codebook comprises transmitting the second hybrid automatic repeat request acknowledgement codebook in response to detecting the downlink control information format.

In some embodiments: the first hybrid automatic repeat request acknowledgement information comprises high-priority hybrid automatic repeat request acknowledgement information and low-priority hybrid automatic repeat request acknowledgement information; at least the part of the first hybrid automatic repeat request acknowledgement information to be transmitted together with the second hybrid automatic repeat request acknowledgement information is determined based on the detected downlink control information format; and the second hybrid automatic repeat request acknowledgement codebook comprises the high-priority hybrid automatic repeat request acknowledgement information and the second hybrid automatic repeat request acknowledgement information.

In various embodiments, the processor constructs the second hybrid automatic repeat request acknowledgement codebook by appending the first hybrid automatic repeat request acknowledgement codebook to a third hybrid automatic repeat request acknowledgement codebook, wherein the third hybrid automatic repeat request acknowledgement codebook is based on the second hybrid automatic repeat request acknowledgement information.

In one embodiment, the first uplink transmission occasion is semi-statically configured.

In certain embodiments: the first hybrid automatic repeat request acknowledgement information comprises hybrid automatic repeat request acknowledgement information of at least one semi-persistent scheduling physical downlink shared channel; and the at least one semi-persistent scheduling physical downlink shared channel is semi-persistently scheduled on at least one slot of at least one serving cell based on at least one semi-persistent scheduling configuration.

In some embodiments, the apparatus further comprises a receiver. The receiver receives at least one deferring indication for a subset of semi-persistent scheduling configurations of the at least one semi-persistent scheduling configuration that hybrid automatic repeat request acknowledgement information of the subset of semi-persistent scheduling configurations can be deferred; wherein at least the part of the first hybrid automatic repeat request acknowledgement information is determined based on the at least one deferring indication and comprises hybrid automatic repeat request acknowledgement information of a subset of semi-persistent scheduling physical downlink shared channels of the at least one semi-persistent scheduling physical downlink shared channel, the subset of semi-persistent scheduling physical downlink shared channels corresponding to the subset of semi-persistent scheduling configurations.

In various embodiments, the processor detects a downlink control information format requesting a transmission of a part of hybrid automatic repeat request acknowledgement information that the user equipment maintains on a third uplink transmission occasion, wherein the downlink control information format includes an indication of the part of the hybrid automatic repeat request acknowledgement information.

In one embodiment, the part of the hybrid automatic repeat request acknowledgement information corresponds to hybrid automatic repeat request acknowledgement information of a subset of serving cells.

In one embodiment, a method of a network device comprises: receiving a second hybrid automatic repeat request acknowledgement codebook on a second uplink transmission occasion, wherein the second hybrid automatic repeat request acknowledgement codebook is based on at least a part of first hybrid automatic repeat request acknowledgement information and second hybrid automatic repeat request acknowledgement information, a first uplink transmission occasion starts earlier than the second uplink transmission occasion, a first hybrid automatic repeat request acknowledgement codebook is constructed based on the first hybrid automatic repeat request acknowledgement information, the first hybrid automatic repeat request acknowledgement codebook is scheduled to be transmitted on the first uplink transmission occasion, at least the part of the first hybrid automatic repeat request acknowledgement information is determined to be transmitted together with second hybrid automatic repeat request acknowledgement information in response to the first uplink transmission occasion not being available for transmission, and the second hybrid automatic repeat request acknowledgement information is scheduled to be transmitted later than the first uplink transmission occasion.

In certain embodiments, the first uplink transmission occasion is semi-statically configured.

In some embodiments: the first hybrid automatic repeat request acknowledgement information comprises hybrid automatic repeat request acknowledgement information of at least one semi-persistent scheduling physical downlink shared channel; and the at least one semi-persistent scheduling physical downlink shared channel is semi-persistently scheduled on at least one slot of at least one serving cell based on at least one semi-persistent scheduling configuration.

In one embodiment, an apparatus comprises a network device. The apparatus further comprises: a receiver that receives a second hybrid automatic repeat request acknowledgement codebook on a second uplink transmission occasion, wherein the second hybrid automatic repeat request acknowledgement codebook is based on at least a part of first hybrid automatic repeat request acknowledgement information and second hybrid automatic repeat request acknowledgement information, a first uplink transmission occasion starts earlier than the second uplink transmission occasion, a first hybrid automatic repeat request acknowledgement codebook is constructed based on the first hybrid automatic repeat request acknowledgement information, the first hybrid automatic repeat request acknowledgement codebook is scheduled to be transmitted on the first uplink transmission occasion, at least the part of the first hybrid automatic repeat request acknowledgement information is determined to be transmitted together with second hybrid automatic repeat request acknowledgement information in response to the first uplink transmission occasion not being available for transmission, and the second hybrid automatic repeat request acknowledgement information is scheduled to be transmitted later than the first uplink transmission occasion.

In certain embodiments, the first uplink transmission occasion is semi-statically configured.

In some embodiments: the first hybrid automatic repeat request acknowledgement information comprises hybrid automatic repeat request acknowledgement information of at least one semi-persistent scheduling physical downlink shared channel; and the at least one semi-persistent scheduling physical downlink shared channel is semi-persistently scheduled on at least one slot of at least one serving cell based on at least one semi-persistent scheduling configuration.

In one embodiment, a method in a UE comprises: receiving first scheduling information of first HARQ-ACK information, where at least a first uplink transmission occasion for transmission of the first HARQ-ACK information is determined based on the first scheduling information; receiving second scheduling information of second HARQ-ACK information, where at least a second uplink transmission occasion for transmission of the second HARQ-ACK information is determined based on the second scheduling information; constructing a first HARQ-ACK codebook based on the first HARQ-ACK information; constructing a second HARQ-ACK codebook based on the second HARQ-ACK information; and transmitting a third HARQ-ACK codebook on the second uplink transmission occasion when the first uplink transmission occasion is not available, where the third HARQ-ACK codebook is constructed based on the first HARQ-ACK codebook and the second HARQ-ACK codebook, wherein the first uplink transmission occasion starts earlier than the second uplink transmission occasion.

In certain embodiments, the third HARQ-ACK codebook is constructed by concatenation of the first HARQ-ACK codebook and the second HARQ-ACK codebook.

In some embodiments, an order of the first HARQ-ACK codebook is earlier than an order of the second HARQ-ACK codebook in the third HARQ-ACK codebook.

In various embodiments, the third HARQ-ACK codebook comprises the second HARQ-ACK codebook and a part of the first HARQ-ACK codebook.

In one embodiment, the first HARQ-ACK information comprises at least HARQ-ACK information of at least one SPS PDSCH without a corresponding PDCCH; wherein the at least one SPS PDSCH is semi-persistently scheduled on at least one slot of at least one serving cell based on at least one SPS configuration; and wherein the part of the first HARQ-ACK codebook comprises a part of the first HARQ-ACK information, where the part of the first HARQ-ACK information is associated with a particular serving cell of the at least one serving cell.

In certain embodiments, the particular serving cell is a serving cell of the at least one serving cell that has the lowest serving cell index.

In some embodiments, the part of the first HARQ-ACK information is associated with a particular SPS configuration of the at least one SPS configuration and the particular serving cell.

In various embodiments, the particular SPS configuration is a SPS configuration that has the lowest SPS configuration index among a subset of SPS configurations of the at least one SPS configuration, where the subset of configurations is configured on the particular serving cell.

In one embodiment, the method further comprises receiving information to be used to determine the part of the first HARQ-ACK codebook.

In certain embodiments, the first HARQ-ACK codebook includes at least two HARQ-ACK codebooks, at least one high-priority HARQ-ACK codebook and at least one low-priority HARQ-ACK codebook, wherein the part of the first HARQ-ACK codebook includes the at least one high-priority HARQ-ACK codebook.

In some embodiments, the first HARQ-ACK codebook comprises HARQ-ACK information of a plurality of priorities, wherein the part of the first HARQ-ACK codebook includes the HARQ-ACK information of a subset of the plurality of priorities.

In various embodiments, the third HARQ-ACK codebook is constructed by reordering HARQ-ACK bits of the first HARQ-ACK codebook and the second HARQ-ACK codebook.

In one embodiment, the method further comprises receiving an indication to transmit the third HARQ-ACK codebook on the second uplink transmission occasion when the first uplink transmission occasion is not available, wherein transmitting comprises transmitting when the indication is received.

In certain embodiments, the method further comprises detecting a DCI format requesting a transmission of at least the first HARQ-ACK codebook on a third uplink transmission occasion when the first uplink transmission occasion is not available for transmission, and transmitting at least the first HARQ-ACK codebook on the third uplink transmission occasion.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method (500) of a user equipment, UE, the method comprising:

   constructing (502) a first hybrid automatic repeat request acknowledgement, HARQ-ACK, codebook based on first HARQ-ACK information, wherein the first HARQ-ACK codebook is scheduled to be transmitted on a first uplink transmission occasion;
   determining (504) at least part of the first HARQ-ACK information to be transmitted together with second HARQ-ACK information in response to the first uplink transmission occasion not being available for transmission, wherein the second HARQ-ACK information is scheduled to be transmitted later than the first uplink transmission occasion; and
   transmitting (506) a second HARQ-ACK codebook on a second uplink transmission occasion, wherein the second HARQ-ACK codebook is based on at least the part of the first HARQ-ACK information and the second HARQ-ACK information, and the first uplink transmission occasion starts earlier than the second uplink transmission occasion, and

   wherein:

   the first HARQ-ACK information comprises HARQ-ACK information of at least one semi-persistent scheduling, SPS, physical downlink shared channel, PDSCH; and
   the at least one SPS PDSCH is semi-persistently scheduled on at least one slot of at least one serving cell based on at least one SPS configuration.

2. The method of claim 1, further comprising detecting a downlink control information, DCI, format requesting a transmission of the first HARQ-ACK codebook on the second uplink transmission occasion, wherein transmitting the second HARQ-ACK codebook comprises transmitting the second HARQ-ACK codebook in response to detecting the DCI format.

3. The method of claim 2, wherein:

   the first HARQ-ACK information comprises high-priority HARQ-ACK information and low-priority HARQ-ACK information;
   at least the part of the first HARQ-ACK information to be transmitted together with the second HARQ-ACK information is determined based on the detected DCI format; and
the second HARQ-ACK codebook comprises the high-priority HARQ-ACK information and the second HARQ-ACK information.

4. The method of claim 1, further comprising constructing the second HARQ-ACK codebook by appending the first HARQ-ACK codebook to a third HARQ-ACK codebook, wherein the third HARQ-ACK codebook is based on the second hybrid HARQ-ACK information.

5. The method of claim 1, wherein the first uplink transmission occasion is semi-statically configured.

6. The method of claim 1, further comprising:

receiving at least one deferring indication for a subset of SPS configurations of the at least one SPS configuration that HARQ-ACK information of the subset of SPS configuration can be deferred;
wherein at least the part of the first HARQ-ACK information is determined based on the at least one deferring indication and comprises HARQ-ACK information of a subset of SPS PDSCHs of the at least one SPS PDSCH, the subset of SPS PDSCHs corresponding to the subset of SPS configurations.

7. The method of claim 1, further comprising detecting a DCI format requesting a transmission of a part of HARQ-ACK information that the UE maintains on a third uplink transmission occasion, wherein the DCI format includes an indication of the part of the HARQ-ACK information.

8. The method of claim 7, wherein the part of the HARQ-ACK information corresponds to HARQ-ACK information of a subset of serving cells.

9. An apparatus (200) comprising:

a processor (202) that is configured to:

construct (502) a first hybrid automatic repeat request acknowledgement, HARQ-ACK, codebook based on first HARQ-ACK information, wherein the first HARQ-ACK codebook is scheduled to be transmitted on a first uplink transmission occasion; and
determine (504) at least part of the first HARQ-ACK information to be transmitted together with second HARQ-ACK information in response to the first uplink transmission occasion not being available for transmission, wherein the second HARQ-ACK information is scheduled to be transmitted later than the first uplink transmission occasion; and

a transmitter (210) that is configured to transmit (506) a second HARQ-ACK

codebook on a second uplink transmission occasion, wherein the second HARQ-ACK codebook is based on at least the part of the first HARQ-ACK information and the second HARQ-ACK information, and the first uplink transmission occasion starts earlier than the second uplink transmission occasion, and wherein:

the first HARQ-ACK information comprises HARQ-ACK information of at least one semi-persistent scheduling, SPS, physical downlink shared channel, PDSCH; and
the at least one SPS PDSCH is semi-persistently scheduled on at least one slot of at least one serving cell based on at least one SPS configuration.

10. The apparatus of claim 9, wherein the processor is configured to detect a downlink control information, DCI, format requesting a transmission of the first HARQ-ACK codebook on the second uplink transmission occasion, wherein transmitting the second HARQ-ACK codebook comprises transmitting the second HARQ-ACK codebook in response to detecting the DCI format.

11. The apparatus of claim 10, wherein:

the first HARQ-ACK information comprises high-priority HARQ-ACK information and low-priority HARQ-ACK information;

at least the part of the first HARQ-ACK information to be transmitted together with the second HARQ-ACK information is determined based on the detected DCI format; and

the second HARQ-ACK codebook comprises the high-priority HARQ-ACK information and the second HARQ-ACK information.

12. The apparatus of claim 9, wherein the processor is configured to construct the second HARQ-ACK codebook by appending the first HARQ-ACK codebook to a third HARQ-ACK codebook, wherein the third HARQ-ACK codebook is based on the second HARQ-ACK information.

13. An apparatus (300) comprising:

a transmitter (310) that is configured to transmit (602) scheduling information for a first HARQ-ACK codebook to a user equipment, UE, wherein the first HARQ-ACK codebook is based on first HARQ-ACK information and is scheduled on a first uplink transmission occasion; and

a receiver (312) that is configured to receive (604) a second HARQ-ACK codebook on a second uplink transmission occasion, wherein the second HARQ-ACK codebook is based on at least part of the first HARQ-ACK information and second HARQ-ACK information, the first uplink transmission occasion starts earlier than the second uplink transmission occasion, at least the part of the first HARQ-ACK information is determined to be received together with second HARQ-ACK information in response to the first uplink transmission occasion not being available for transmission by the UE, and the second HARQ-ACK information is scheduled to be received later than the first uplink transmission occasion, and

wherein:

the first HARQ-ACK information comprises HARQ-ACK information of at least one semi-persistent scheduling, SPS, physical downlink shared channel, PDSCH; and

the at least one SPS PDSCH is semi-persistently scheduled on at least one slot of at least one serving cell based on at least one SPS configuration.

14. The apparatus of claim 13, wherein the first uplink transmission occasion is semi-statically configured.


**Patentansprüche**

1. Verfahren (500) eines Benutzergeräts (user equipment - UE), wobei das Verfahren Folgendes umfasst:

Konstruieren (502) eines ersten Codebuchs hybrider automatischer Wiederholungsaufforderungsbestätigungen (hybrid automatic repeat request acknowledgement - HARQ-ACK) basierend auf ersten HARQ-ACK-Informationen, wobei geplant ist, das erste HARQ-ACK-Codebuch bei einer ersten Uplink-Übertragungsgelegenheit zu übertragen;

Bestimmen (504) mindestens eines Teils der ersten HARQ-ACK-Informationen, der zusammen mit zweiten HARQ-ACK-Informationen übertragen werden soll, als Reaktion darauf, dass die erste Uplink-Übertragungsgelegenheit nicht für die Übertragung verfügbar ist, wobei geplant ist, die zweiten HARQ-ACK-Informationen später als die erste Uplink-Übertragungsgelegenheit zu übertragen; und

Übertragen (506) eines zweiten HARQ-ACK-Codebuchs bei einer zweiten Uplink-Übertragungsgelegenheit, wobei das zweite HARQ-ACK-Codebuch auf mindestens dem Teil der ersten HARQ-ACK-Informationen und der zweiten HARQ-ACK-Informationen basiert und die erste Uplink-Übertragungsgelegenheit früher als die zweite Uplink-Übertragungsgelegenheit beginnt und wobei:

die ersten HARQ-ACK-Informationen HARQ-ACK-Informationen mindestens eines SPS(semi-persistent scheduling - semipersistente Planung)-PDSCH (physical downlink shared channel - gemeinsam genutzter physischer Downlink-Kanal) umfassen; und

der mindestens eine SPS-PDSCH basierend auf mindestens einer SPS-Konfiguration semipersistent auf mindestens einem Slot mindestens einer bedienenden Zelle geplant ist.

2. Verfahren nach Anspruch 1, ferner umfassend das Erfassen eines Downlink-Steuerinformations(downlink control information - DCI)-Formats, das eine Übertragung des ersten HARQ-ACK-Codebuchs bei der zweiten Uplink-Übertragungsgelegenheit anfordert, wobei das Übertragen des zweiten HARQ-ACK-Codebuchs das Übertragen des zweiten HARQ-ACK-Codebuchs als Reaktion auf das Erfassen des DCI-Formats umfasst.

3. Verfahren nach Anspruch 2, wobei:

die ersten HARQ-ACK-Informationen HARQ-ACK-Informationen mit hoher Priorität und HARQ-ACK-Informationen mit niedriger Priorität umfassen;
mindestens der Teil der ersten HARQ-ACK-Informationen, der zusammen mit den zweiten HARQ-ACK-Informationen übertragen werden soll, basierend auf dem erfassten DCI-Format bestimmt wird; und
das zweite HARQ-ACK-Codebuch die HARQ-ACK-Informationen mit hoher Priorität und die zweiten HARQ-ACK-Informationen umfasst.

4. Verfahren nach Anspruch 1, ferner umfassend das Konstruieren des zweiten HARQ-ACK-Codebuchs durch Anhängen des ersten HARQ-ACK-Codebuchs an ein drittes HARQ-ACK-Codebuch, wobei das dritte HARQ-ACK-Codebuch auf den zweiten hybriden HARQ-ACK-Informationen basiert.

5. Verfahren nach Anspruch 1, wobei die erste Uplink-Übertragungsgelegenheit semistatisch konfiguriert ist.

6. Verfahren nach Anspruch 1, ferner Folgendes umfassend:

Empfangen mindestens einer Zurückstellungsangabe für eine Teilmenge von SPS-Konfigurationen der mindestens einen SPS-Konfiguration, dass HARQ-ACK-Informationen der Teilmenge der SPS-Konfiguration zurückgestellt werden können;
wobei mindestens der Teil der ersten HARQ-ACK-Informationen basierend auf der mindestens einen Zurückstellungsangabe bestimmt wird und HARQ-ACK-Informationen einer Teilmenge von SPS-PDSCHs des mindestens einen SPS-PDSCH umfasst, wobei die Teilmenge von SPS-PDSCHs der Teilmenge von SPS-Konfigurationen entspricht.

7. Verfahren nach Anspruch 1, ferner umfassend das Erfassen eines DCI-Formats, das eine Übertragung eines Teils von HARQ-ACK-Informationen anfordert, die das UE bei einer dritten Uplink-Übertragungsgelegenheit aufrechterhält, wobei das DCI-Format eine Angabe des Teils der HARQ-ACK-Informationen beinhaltet.

8. Verfahren nach Anspruch 7, wobei der Teil der HARQ-ACK-Informationen HARQ-ACK-Informationen einer Teilmenge von bedienenden Zellen entspricht.

9. Vorrichtung (200), Folgendes umfassend:
einen Prozessor (202), der zu Folgendem konfiguriert ist:

Konstruieren (502) eines ersten Codebuchs hybrider automatischer Wiederholungsaufforderungsbestätigungen (HARQ-ACK) basierend auf ersten HARQ-ACK-Informationen, wobei geplant ist, das erste HARQ-ACK-Codebuch bei einer ersten Uplink-Übertragungsgelegenheit zu übertragen; und
Bestimmen (504) mindestens eines Teils der ersten HARQ-ACK-Informationen, der zusammen mit zweiten HARQ-ACK-Informationen übertragen werden soll, als Reaktion darauf, dass die erste Uplink-Übertragungsgelegenheit nicht für die Übertragung verfügbar ist, wobei geplant ist, die zweiten HARQ-ACK-Informationen später als die erste Uplink-Übertragungsgelegenheit zu übertragen; und
einen Sender (210), der dazu konfiguriert ist, ein zweites HARQ-ACK-Codebuch bei einer zweiten Uplink-Übertragungsgelegenheit zu übertragen (506), wobei das zweite HARQ-ACK-Codebuch auf mindestens dem Teil der ersten HARQ-ACK-Informationen und der zweiten HARQ-ACK-Informationen basiert und die erste Uplink-Übertragungsgelegenheit früher als die zweite Uplink-Übertragungsgelegenheit beginnt und
wobei:

die ersten HARQ-ACK-Informationen HARQ-ACK-Informationen mindestens eines SPS(semi-persistent scheduling - semipersistente Planung)-PDSCH (physical downlink shared channel - gemeinsam genutzter physischer Downlink-Kanal) umfassen; und
der mindestens eine SPS-PDSCH basierend auf mindestens einer SPS-Konfiguration semipersistent auf mindestens einem Slot mindestens einer bedienenden Zelle geplant ist.

10. Vorrichtung nach Anspruch 9, wobei der Prozessor dazu konfiguriert ist, ein Downlink-Steuerinformations(DCI)-Format zu erfassen, das eine Übertragung des ersten HARQ-ACK-Codebuchs bei der zweiten Uplink-Übertragungsgelegenheit anfordert, wobei das Übertragen des zweiten HARQ-ACK-Codebuchs das Übertragen des zweiten HARQ-ACK-Codebuchs als Reaktion auf das Erfassen des DCI-Formats umfasst.

11. Vorrichtung nach Anspruch 10, wobei:

die ersten HARQ-ACK-Informationen HARQ-ACK-Informationen mit hoher Priorität und HARQ-ACK-Informationen mit niedriger Priorität umfassen;
mindestens der Teil der ersten HARQ-ACK-Informationen, der zusammen mit den zweiten HARQ-ACK-Informationen übertragen werden soll, basierend auf dem erfassten DCI-Format bestimmt wird; und
das zweite HARQ-ACK-Codebuch die HARQ-ACK-Informationen mit hoher Priorität und die zweiten HARQ-ACK-Informationen umfasst.

12. Vorrichtung nach Anspruch 9, wobei der Prozessor dazu konfiguriert ist, das zweite HARQ-ACK-Codebuch durch Anhängen des ersten HARQ-ACK-Codebuchs an ein drittes HARQ-ACK-Codebuch zu konstruieren, wobei das dritte HARQ-ACK-Codebuch auf den zweiten HARQ-ACK-Informationen basiert.

13. Vorrichtung (300), Folgendes umfassend:

einen Sender (310), der dazu konfiguriert ist, Planungsinformationen für ein erstes HARQ-ACK-Codebuch an ein Benutzergerät (UE) zu übertragen (602), wobei das erste HARQ-ACK-Codebuch auf ersten HARQ-ACK-Informationen basiert und bei einer ersten Uplink-Übertragungsgelegenheit geplant ist; und
einen Empfänger (312), der dazu konfiguriert ist, ein zweites HARQ-ACK-Codebuch bei einer zweiten Uplink-Übertragungsgelegenheit zu empfangen (604), wobei das zweite HARQ-ACK-Codebuch auf mindestens einem Teil der ersten HARQ-ACK-Informationen und der zweiten HARQ-ACK-Informationen basiert, die erste Uplink-Übertragungsgelegenheit früher als die zweite Uplink-Übertragungsgelegenheit beginnt, bestimmt wird, dass mindestens der Teil der ersten HARQ-ACK-Informationen zusammen mit zweiten HARQ-ACK-Informationen empfangen wird, als Reaktion darauf, dass die erste Uplink-Übertragungsgelegenheit nicht für die Übertragung durch das UE verfügbar ist, und geplant ist, dass die zweiten HARQ-ACK-Informationen später als die erste Uplink-Übertragungsgelegenheit empfangen werden, und
wobei:

die ersten HARQ-ACK-Informationen HARQ-ACK-Informationen mindestens eines SPS(semi-persistent scheduling - semipersistente Planung)-PDSCH (physical downlink shared channel - gemeinsam genutzter physischer Downlink-Kanal) umfassen; und
der mindestens eine SPS-PDSCH basierend auf mindestens einer SPS-Konfiguration semipersistent auf mindestens einem Slot mindestens einer bedienenden Zelle geplant ist.

14. Vorrichtung nach Anspruch 13, wobei die erste Uplink-Übertragungsgelegenheit semistatisch konfiguriert ist.

## Revendications

1. Procédé (500) d'un équipement utilisateur, UE, le procédé comprenant :

la construction (502) d'un premier livre de codes d'acquittement de demande de répétition automatique hybride, HARQ-ACK, basé sur des premières informations HARQ-ACK, dans lequel le premier livre de codes HARQ-ACK est planifié pour être transmis lors d'une première occasion de transmission en liaison montante ;
la détermination (504) d'au moins une partie des premières informations HARQ-ACK à transmettre conjointement avec des secondes informations HARQ-ACK en réponse à l'indisponibilité de la première occasion de transmission en liaison montante pour la transmission, dans lequel les secondes informations HARQ-ACK sont planifiées pour être transmises après la première occasion de transmission en liaison montante ; et
la transmission (506) d'un second livre de codes HARQ-ACK lors d'une seconde occasion de transmission en liaison montante, dans lequel le second livre de codes HARQ-ACK est basé sur au moins la partie des premières informations HARQ-ACK et les secondes informations HARQ-ACK, et la première occasion de transmission en liaison montante commence avant la seconde occasion de transmission en liaison montante, et

dans lequel :

les premières informations HARQ-ACK comprennent des informations HARQ-ACK d'au moins un canal partagé physique de liaison descendante, PDSCH, de planification semi-persistante, SPS ; et

l'au moins un PDSCH de SPS est planifié de manière semi-persistante sur au moins un créneau d'au moins une cellule de service sur la base d'au moins une configuration de SPS.

2. Procédé selon la revendication 1, comprenant en outre la détection d'un format d'informations de contrôle de liaison descendante, DCI, demandant une transmission du premier livre de codes HARQ-ACK lors de la seconde occasion de transmission en liaison montante, dans lequel la transmission du second livre de codes HARQ-ACK comprend la transmission du second livre de codes HARQ-ACK en réponse à la détection du format de DCI.

3. Procédé selon la revendication 2, dans lequel :

les premières informations HARQ-ACK comprennent des informations HARQ-ACK de haute priorité et des informations HARQ-ACK de faible priorité ;

au moins la partie des premières informations HARQ-ACK à transmettre conjointement avec les secondes informations HARQ-ACK est déterminée sur la base du format de DCI détecté ; et

le second livre de codes HARQ-ACK comprend les informations HARQ-ACK de haute priorité et les secondes informations HARQ-ACK.

4. Procédé selon la revendication 1, comprenant en outre la construction du second livre de codes HARQ-ACK en ajoutant le premier livre de codes HARQ-ACK à un troisième livre de codes HARQ-ACK, dans lequel le troisième livre de codes HARQ-ACK est basé sur les secondes informations HARQ-ACK hybrides.

5. Procédé selon la revendication 1, dans lequel la première occasion de transmission en liaison montante est configurée de manière semi-statique.

6. Procédé selon la revendication 1, comprenant en outre :

la réception d'au moins une indication de report pour un sous-ensemble de configurations de SPS de l'au moins une configuration de SPS selon laquelle des informations HARQ-ACK du sous-ensemble de configurations de SPS peuvent être reportées ;

dans lequel au moins la partie des premières informations HARQ-ACK est déterminée sur la base de l'au moins une indication de report et comprend des informations HARQ-ACK d'un sous-ensemble de PDSCH de SPS de l'au moins un PDSCH de SPS, le sous-ensemble de PDSCH de SPS correspondant au sous-ensemble de configurations de SPS.

7. Procédé selon la revendication 1, comprenant en outre la détection d'un format de DCI demandant une transmission d'une partie d'informations HARQ-ACK que l'UE conserve lors d'une troisième occasion de transmission en liaison montante, dans lequel le format de DCI inclut une indication de la partie des informations HARQ-ACK.

8. Procédé selon la revendication 7, dans lequel la partie des informations HARQ-ACK correspond à des informations HARQ-ACK d'un sous-ensemble de cellules de service.

9. Appareil (200), comprenant :

un processeur (202) qui est configuré pour :

construire (502) un premier livre de codes d'acquittement de demande de répétition automatique hybride, HARQ-ACK, basé sur des premières informations HARQ-ACK, dans lequel le premier livre de codes HARQ-ACK est planifié pour être transmis lors d'une première occasion de transmission en liaison montante ; et

déterminer (504) au moins une partie des premières informations HARQ-ACK à transmettre conjointement avec des secondes informations HARQ-ACK en réponse à l'indisponibilité de la première occasion de transmission en liaison montante pour la transmission, dans lequel les secondes informations HARQ-ACK sont planifiées pour être transmises après la première occasion de transmission en liaison montante ; et

un émetteur (210) qui est configuré pour transmettre (506) un second livre de codes HARQ-ACK lors d'une seconde occasion de transmission en liaison montante, dans lequel le second livre de codes HARQ-ACK est basé sur au moins la partie des premières informations HARQ-ACK et les secondes informations HARQ-ACK, et la première occasion de transmission en liaison montante commence avant la seconde occasion de transmission en liaison montante, et

dans lequel :

les premières informations HARQ-ACK comprennent des informations HARQ-ACK d'au moins un canal partagé physique de liaison descendante, PDSCH, de planification semi-persistante, SPS ; et
l'au moins un PDSCH de SPS est planifié de manière semi-persistante sur au moins un créneau d'au moins une cellule de service sur la base d'au moins une configuration de SPS.

10. Appareil selon la revendication 9, dans lequel le processeur est configuré pour détecter un format d'informations de contrôle de liaison descendante, DCI, demandant une transmission du premier livre de codes HARQ-ACK lors de la seconde occasion de transmission en liaison montante, dans lequel la transmission du second livre de codes HARQ-ACK comprend la transmission du second livre de codes HARQ-ACK en réponse à la détection du format de DCI.

11. Appareil selon la revendication 10, dans lequel :

les premières informations HARQ-ACK comprennent des informations HARQ-ACK de haute priorité et des informations HARQ-ACK de faible priorité ;
au moins la partie des premières informations HARQ-ACK à transmettre conjointement avec les secondes informations HARQ-ACK est déterminée sur la base du format de DCI détecté ; et
le second livre de codes HARQ-ACK comprend les informations HARQ-ACK de haute priorité et les secondes informations HARQ-ACK.

12. Appareil selon la revendication 9, dans lequel le processeur est configuré pour construire le second livre de codes HARQ-ACK en ajoutant le premier livre de codes HARQ-ACK à un troisième livre de codes HARQ-ACK, dans lequel le troisième livre de codes HARQ-ACK est basé sur les secondes informations HARQ-ACK hybrides.

13. Appareil (300), comprenant :

un émetteur (310) qui est configuré pour émettre (602) des informations de planification pour un premier livre de codes HARQ-ACK à un équipement utilisateur, UE, dans lequel le premier livre de codes HARQ-ACK est basé sur des premières informations HARQ-ACK et est planifié lors d'une première occasion de transmission en liaison montante ; et
un récepteur (312) qui est configuré pour recevoir (604) un second livre de codes HARQ-ACK lors d'une seconde occasion de transmission en liaison montante, dans lequel le second livre de codes HARQ-ACK est basé sur au moins une partie des premières informations HARQ-ACK et des secondes informations HARQ-ACK, la première occasion de transmission en liaison montante commence avant la seconde occasion de transmission en liaison montante, au moins la partie des premières informations HARQ-ACK est déterminée pour être reçue conjointement avec des secondes informations HARQ-ACK en réponse à l'indisponibilité de la première occasion de transmission en liaison montante pour une transmission par l'UE, et les secondes informations HARQ-ACK sont planifiées pour être reçues après la première occasion de transmission en liaison montante, et

dans lequel :

les premières informations HARQ-ACK comprennent des informations HARQ-ACK d'au moins un canal partagé physique de liaison descendante, PDSCH, de planification semi-persistante, SPS ; et
l'au moins un PDSCH de SPS est planifié de manière semi-persistante sur au moins un créneau d'au moins une cellule de service sur la base d'au moins une configuration de SPS.

14. Appareil selon la revendication 13, dans lequel la première occasion de transmission en liaison montante est configurée de manière semi-statique.

FIG. 1

200

## Remote Unit
### 102

| | |
|---|---|
| Processor<br>202 | Memory<br>204 |
| Input Device<br>206 | Display<br>208 |
| Transmitter<br>210 | Receiver<br>212 |

# FIG. 2

300

Network Unit
104

Processor
302

Memory
304

Input Device
306

Display
308

Transmitter
310

Receiver
312

FIG. 3

400

```
-- ASN1START
-- TAG-SPS-CONFIG-START

SPS-Config ::=                      SEQUENCE {
    periodicity                     ENUMERATED {ms10, ms20, ms32, ms40, ms64, ms80, ms128, ms160,
ms320, ms640,
                                                spare6, spare5, spare4, spare3, spare2,
spare1},
    nrofHARQ-Processes              INTEGER (1..8),
    n1PUCCH-AN                      PUCCH-ResourceId
OPTIONAL,    -- Need M
    mcs-Table                       ENUMERATED {qam64LowSE}
OPTIONAL,    -- Need S
    ....
    [[
    sps-ConfigIndex-r16             SPS-ConfigIndex-r16
OPTIONAL,    -- Cond SPS-List
    harq-ProcID-Offset-r16          INTEGER (0..15)
OPTIONAL,    -- Need R
    periodicityExt-r16              INTEGER (1..5120)
OPTIONAL,    -- Need R
    harq-CodebookID-r16             INTEGER (1..2)
OPTIONAL,    -- Need R
    pdsch-AggregationFactor-r16     ENUMERATED {n1, n2, n4, n8 }
OPTIONAL     -- Need S
    ]]
}

-- TAG-SPS-CONFIG-STOP
-- ASN1STOP
```

# FIG. 4

500

**Begin**

502 — Construct A First Hybrid Automatic Repeat Request Acknowledgement Codebook Based On First Hybrid Automatic Repeat Request Acknowledgement Information, Wherein The First Hybrid Automatic Repeat Request Acknowledgement Codebook Is Scheduled To Be Transmitted On A First Uplink Transmission Occasion

504 — Determine At Least Part Of The First Hybrid Automatic Repeat Request Acknowledgement Information To Be Transmitted Together With Second Hybrid Automatic Repeat Request Acknowledgement Information In Response To The First Uplink Transmission Occasion Not Being Available For Transmission, Wherein The Second Hybrid Automatic Repeat Request Acknowledgement Information Is Scheduled To Be Transmitted Later Than The First Uplink Transmission Occasion

506 — Transmit A Second Hybrid Automatic Repeat Request Acknowledgement Codebook On A Second Uplink Transmission Occasion, Wherein The Second Hybrid Automatic Repeat Request Acknowledgement Codebook Is Based On At Least The Part Of The First Hybrid Automatic Repeat Request Acknowledgement Information And The Second Hybrid Automatic Repeat Request Acknowledgement Information, And The First Uplink Transmission Occasion Starts Earlier Than The Second Uplink Transmission Occasion

**End**

# FIG. 5

600

Begin

602 ~ Transmit Scheduling Information For A First Hybrid Automatic Repeat Request Acknowledgement Codebook To A User Equipment, Wherein The First Hybrid Automatic Repeat Request Acknowledgement Codebook Is Based On First Hybrid Automatic Repeat Request Acknowledgement Information And Is Scheduled On A First Uplink Transmission Occasion

604 ~ Receive A Second Hybrid Automatic Repeat Request Acknowledgement Codebook On A Second Uplink Transmission Occasion, Wherein The Second Hybrid Automatic Repeat Request Acknowledgement Codebook Is Based On At Least A Part Of The First Hybrid Automatic Repeat Request Acknowledgement Information And Second Hybrid Automatic Repeat Request Acknowledgement Information, The First Uplink Transmission Occasion Starts Earlier Than The Second Uplink Transmission Occasion,  At Least The Part Of The First Hybrid Automatic Repeat Request Acknowledgement Information Is Determined To Be Received Together With The Second Hybrid Automatic Repeat Request Acknowledgement Information In Response To The First Uplink Transmission Occasion Not Being Available For Transmission By The User Equipment, And The Second Hybrid Automatic Repeat Request Acknowledgement Information Is Scheduled To Be Received Later Than The First Uplink Transmission Occasion

End

FIG. 6

**REFERENCES CITED IN THE DESCRIPTION**

**Patent documents cited in the description**

- CN 111181709 A

- WO 2020033623 A1